# EUROPEAN PATENT APPLICATION

(11) **EP 1 503 317 A2**
(43) Date of publication of application: **02.02.2005**
(21) Application number: 04018114.1
(22) Date of filing: 30.07.2004
(51) Int. Cl.: G06F 17/60

(54) **System and method for managing approval status information**

(30) Priority: 30.07.2003 JP 2003203973; 20.07.2004 JP 2004211103
(71) Applicant: MATSUSHITA ELECTRIC INDUSTRIAL CO., LTD., Kadoma-shi, Osaka 571-8501 (JP)
(72) Inventor: Inagaki, Yuichi, Hirakata-shi Osaka 573-0164 (JP); Shinki, Makoto, Shijonawate-shi Osaka 572-0052 (JP)
(74) Representative: Betten & Resch

(57) **Abstract**

A system and method for maintaining confidentiality of the workflow process information and improving information accessibility for authorized persons are disclosed. A drafter's PC (200) inputs price setting information into a control server (100) through a LAN. An approver's PC (300) inputs approval status information into the control server through the LAN. The drafter's PC (200) and the approver's PC (300) can browse the inputted data. The control server (100) retrieves the approval status information but the price setting information from the inputted data according to a user database (130) and a security setting table (150), and sends the e-mail based on the information retrieved to the drafter's mobile phone (400) outside the LAN.

## Description

### CROSS-REFERENCE TO RELATED APPLICATIONS

The present application claims the benefit of patent application number 2003-203973, filed in Japan on July 30, 2003, and patent application number 2004-211103, filed in Japan on July 20, 2004, the subject matter of which are hereby incorporated herein by reference.

### BACKGROUND OF THE INVENTION

### 1. Field of the Invention

The present invention relates to a system and a method for managing approval status information and more particularly to maintain confidentiality of the approval status and improving information accessibility for authorized persons.

### 2. Description of the Related Art

In established organization, drafting business plans by drafters and approving the plans by authorized persons are routine workflow. For example, before delivering products to buyers, a drafter requires to decide a product price setting and an approver requires to review and make decision on approval for the price.

In order to improve efficiency of the approval process, a central server connected to a Local Area Network (LAN) in the organization is used to record the data related to the approval process. The organization members (i.e. a drafter or an approver) input a draft business plan or approval status in response to the plan into the central server and the members can browse them if necessary. Generally, the LAN requires to have a system such as a firewall for preventing access from outside of the LAN, controlling communications, or supervising communications within the network.

As a system for managing the approval process information, an example of electrical approval process system for improving efficiency of the products ordering workflow is disclosed in JP2001-331758. That system can display an approval status and required approver lists according to the price, and send a message to a purchaser after necessary approval process completed. It is beneficial that the purchaser can confirm the approval status as appropriate timing by receiving the message.

However, there is a possibility of losing information secrecy in the system. For example, when the system send the message to the purchaser's mobile phone through a public network, leaking of highly confidential information such as the price may occur within the public network (e.g. information intercepted or decrypted).

### SUMMARY OF THE INVENTION

In one aspect, the invention provides a system and a method for linking a user terminal device, which is connected through a non-secure communication link to an institution, to a computerized workflow process which should be carried out in absolute secrecy.

In other aspect, the invention provides a system and a method for maintaining confidentiality of workflow process information and improving information accessibility for authorized persons.

In other aspect, the invention provides a system and a method for transmitting extracted information to a user terminal. As a result of the information extraction, the volume of transmitting information can be reduced. Therefore, the system and method are also applicable when the system and method to be implemented under certain limited transmission capability (e.g. limited bandwidth).
(1) In one aspect of the present invention, a networked computer system comprising:
   (a) a secure network inside an institution which is accessible to authorized individuals, said secure network comprising a server for storing a database comprising proposal information proposed by a first authorized individual and needs to be approved by a second authorized individual, said proposal information comprising information which need to be kept confidential;
   (b) a connection to a user terminal outside said secure network through a less secure communications link,
      said networked computer system further comprising:
   (c) at least one first computer operated by said first individual for drafting said proposal and storing it as proposal information in said database on said server through said secure network;
   (d) at least one second computer operated by said second individual for accessing said proposal on said server and for adding approval status information indicating an approval status with respect to said proposal and storing it as approval status information in said database on said server through said secure network; wherein said proposal information and/or said approval status information, comprise at least one information which should be kept confidential;
   (e) extracting means adapted to extract information from said proposal information and said approval status information stored in said database, said extracted information to be transmitted to a user through said less secure communications link, said extraction being performed such that at least one information identifying a certain proposal and at least one information indicating an approval status are extracted, whereas one or more information which should be kept confidential is not extracted from said database;
   (f) message generation means adapted to generate a message to be transmitted to a user through said less secure communications link based on said extracted information;
   (g) transmitting means adapted to transmit said generated message to said user terminal through said less secure communications link;
   (h) reception means adapted to receive said transmitted message by said user terminal; and
   (i) display means for displaying said at least one information identifying said proposal and said at least one information indicating said approval status.
(2) In one aspect of the present invention, a less secure communications link comprises one or more of the following:
   an email connection;
   a short-message-services (SMS) connection;
   a WAP connection;
   a GPRS connection;
   an i-mode connection.
(3) In one aspect of the present invention, the information which should be kept confidential comprises price information and wherein said at least one information indicating an approval status comprises approval status information for said price.
(4) In one aspect of the present invention, the system further comprising:
   (j) means adapted to automatically calculate a price difference between a draft price of said proposal drafted by said first individual and an approved price approved by said second individual;
   (k) means adapted to include said price difference when generating said message to be transmitted to said user.
(5) In one aspect of the present invention, wherein said extracting means is adapted to execute said extraction processing at specified time periods.
(6) In one aspect of the present invention, wherein (f) the message generation means further comprises:
   (l) determination means adapted to determine whether the message generated based on said extracted data exceeds a specified data volume, and wherein in cases where it is determined that said specified data volume is exceeded, (f) said message generation means is adapted to generate said message based on less information such that the specified data volume is not exceeded.

   In one aspect, the invention provides a system and a method for transmitting workflow process information to a user terminal device under certain limited transmission capability (e.g. limited bandwidth).
(7) In one aspect of the present invention, wherein said database for each information stored therein furthermore stores corresponding priority information, and wherein in cases where it is determined that said specified data volume is exceeded, said less information based on which said message is generated are selected based on said priority information.
   In one aspect, the invention provides a system and a method for transmitting workflow process information to the device under certain limited transmission capability while still making sure that necessary parts of the information are included.
(8) In one aspect of the present invention, the system further comprising:
   (m) conversion means adapted to convert the data format of said at least on information which should be kept confidential according to a predefined format conversion scheme in order to disguise the content of said at least on information; and
   (n) means adapted to include said converted confidential information into said message to be transmitted to said user.
(9) In one aspect of the present invention, an approval status notifying system comprising:
   an approval status notifying device and a terminal device being interconnected to the approval status notifying device;
      (a) the approval status notifying device comprises:
         (i) means for accessing a notifying information data, which is accessible to the terminal device within a closed network, wherein the notifying information data comprises proposal information including a confidential item and approval information including an approval status item in response to the proposal information;
         (ii) means for retrieving a public network use notifying data, wherein the public network use notifying data is retrieved from the notifying information data and comprises at least the approval status item but the confidential item;
         (iii) means for generating an e-mail based on the notifying data retrieved; and
         (iv) means for sending the e-mail to the terminal device within the public network;
      (b) the terminal device comprises:
         (i) means for receiving the e-mail; and
         (ii) means for displaying the public network use notifying data based on the e-mail received.

   In one aspect of the present invention, the system improves information accessibility with detailed approval status information for the user device within the closed network. Furthermore, when transmitting the approval status information to the user device within the public network where there is a possibility of losing information secrecy, the system maintains confidentiality of the approval status information by excluding the confidential information from the approval status information.
(13) In one aspect of the present invention, wherein (a-ii) the retrieving means retrieves the items, which constitute the public network use notifying data, in the order of descending priorities according to a pre-set priority order information.
   In one aspect of the present invention, users of the terminal device can check the notifying data in the order of the priority.
(14) In one aspect of the present invention, wherein the confidential item comprises price information; and
   wherein the approval status item comprises an approval status in response to the price.
   In one aspect of the present invention, when transmitting the approval status information to the user device within the public network where there is a possibility of losing information secrecy, the system maintains confidentiality of the approval status information by excluding the price as the confidential information from the approval status information.
(15) In one aspect of the present invention, wherein the approval status item comprises a price difference between the price and an approvable price.
   In one aspect of the present invention, users of the terminal device can utilize the price difference for determining the approvable price.
(16) In one aspect of the present invention, wherein (a-ii) the retrieved means further executing the retrieving processing at specified time periods.
   In one aspect of the present invention, the terminal device receives updated e-mails at specified time periods.
(17) In one aspect of the present invention, wherein (a-iii) the generating means further, in the case in which the notifying data exceeds a specified data volume, generating the e-mail with excluding an item of more than the specified data volume, and including a message about the excess volume in the e-mail.
   In one aspect of the present invention, the terminal device receives the e-mails with a short time receiving process since the data volume of e-mail is limited.
(19) In one aspect of the present invention, a workflow system comprising:
   a control server device, terminal devices being interconnected to the control server device within a closed network, and a drafter's mobile use terminal device being interconnected to the control server device within a public network;
      (a) the control server device comprises:
         (i) means for entering proposal information, which is sent by a drafter's terminal device and comprises confidential information, into a recording means;
         (ii) the recording means for recording the proposal information;
         (iii) means for entering approval information, which sent by an approver's terminal device, into the recording means by correlating with the proposal information;
         (iv) means for generating a public network use notifying e-mail, wherein the notifying e-mail is retrieved from the recording means and comprises the proposal information provided with the approval information but the confidential information; and
         (v) means for sending the e-mail to the drafter's mobile use terminal device;
      (b) the drafter's terminal device comprises:
         (i) means for extracting the confidential information from the proposal information; and
         (ii) means for outputting the confidential information to the drafter's mobile use terminal device;
      (c) the drafter's mobile use terminal device comprises:
         (i) means for entering the confidential information from the drafter's terminal device into a confidential information recording means;
         (ii) the means for recording the confidential information;
         (iii) means for receiving the public network use notifying e-mail from the control server device;
         (iv) means for combining the confidential information recorded on the recording means with the notifying e-mail; and
         (v) means for displaying the notifying e-mail combined with the confidential information.
(29) In one aspect of the present invention, a workflow system comprising:
   a control server device, terminal devices being interconnected to the control server device within a closed network, and a drafter's mobile use terminal device being interconnected to the control server device within a public network;
      (a) the control server device comprises:
         (i) means for entering an encryption key and proposal information, which is sent by a drafter's terminal device and comprises confidential information, into a recording means;
         (ii) the recording means for recording the proposal information by correlating with the encryption key;
         (iii) means for entering approval information, which sent by an approver's terminal device, into the recording means by correlating with the proposal information;
         (iv) means for generating a public network use notifying e-mail, wherein the generating means for retrieving the proposal information provided with the approval information from the recording means, for generating the e-mail based on the proposal information retrieved, and for encrypting the e-mail generated with the encryption key recorded in the recording means; and
         (v) means for sending the e-mail to the drafter's mobile use terminal device;
      (b) a drafter's terminal device comprises:
         (i) means for generating the encryption key; and
         (ii) means for outputting the key together with the confidential information to the drafter's mobile use terminal device and the control server device;
      (c) the drafter's mobile use terminal device comprises:
         (i) means for entering the encryption key from the drafter's terminal device into a key information recording means;
         (ii) the means for recording the key information;
         (iii) means for receiving the e-mail encrypted from the control server device;
         (iv) means for decrypting the e-mail encrypted through the use of the key recorded on the recording means; and
         (vi) means for displaying the e-mail decrypted.
(34) In one aspect of the present invention, a workflow system comprising:
   an approval status notifying device, terminal device being interconnected to the approval status notifying device within a closed network, and a drafter's mobile use terminal device being interconnected to the approval status notifying device within a public network;
      (a) the approval status notifying device comprises:
         (i) means for entering proposal information, which is sent by a drafter's terminal device and comprises confidential information, into a recording means;
         (ii) the recording means for recording the proposal information:
         (iii) means for accessing a notifying information data, which is accessible to the terminal device within the closed network, wherein the notifying information data comprises the proposal information including the confidential information and an approval information including an approval status information in response to the proposal information;
         (iv) means for retrieving a public network use notifying data, wherein the public network use notifying data are retrieved from the notifying information data and comprises at least the approval status information but the confidential information;
         (v) means for generating an e-mail based on the notifying data retrieved; and
         (vi) means for sending the e-mail to the drafter's mobile use terminal device within the public network;
      (b) the drafter's terminal device comprises:
         (i) means for sending the proposal information to the approval status notifying device;
      (c) the drafter's mobile use terminal device comprises:
         (i) means for receiving the e-mail; and
         (ii) means for displaying the public network use notifying data based on the e-mail received.

The definitions of the terms used herein will be explained.
The term "closed network" in the present invention includes a network connecting computers to each other within a specific area such as the buildings, the institutions, or the organizations where there are no communications to the outside of specific area, or the communications can be prevented. Examples of the term "closed network" include a network such as the Local Area Network ("LAN"), the Intranet, or the dedicated lines. Furthermore, even though a public network is included in network communications, the term "closed network" includes such network where there is a rare possibility of losing data secrecy by utilizing communication technology for the communications block, the communications supervising, or the communications controlling, etc.. Examples of the communications controlling include a security technology to connect several communication points so as to develop secure communication lines in the Internet (e.g. Virtual Private Network (VPN)).

The term "public network" in the present invention includes a network connecting unspecified computers to each other or a network where there is a possibility of unauthorized accesses, or information intercepted/decrypted through the network. Examples of the term "public network" include a network (or at least one part of the network) comprises the public communication line, the Internet, the wireless communication network, or the server device for the public communication.

The features of the present invention can be described broadly as set forth above. The structures and characters of the present invention will be apparent from the following detailed description of the invention together with those features, effects, and drawings.

### BRIEF DESCRIPTION OF THE DRAWINGS

Fig. 1 shows a system architecture of price information managing system according to an embodiment of the present invention.
Fig. 2 shows an overall process of the price information managing system.
Fig. 3 shows a function block diagram of the price information managing system.
Fig. 4 illustrates a hardware configuration example of a control server according to an embodiment.
Fig. 5 illustrates a hardware configuration example of a drafter's PC according to an embodiment.
Fig. 6 illustrates a hardware configuration example of an approver's PC according to an embodiment.
Fig. 7 illustrates a hardware configuration example of a mobile phone according to an embodiment.
Fig. 8 illustrates a configuration example of a price information database according to an embodiment.
Fig. 9 illustrates a configuration example of a user database according to an embodiment.
Fig. 10 illustrates a configuration example of a security setting table according to an embodiment.
Fig. 11 illustrates a configuration example of a mail database according to an embodiment.
Fig. 12 shows an example of program flowchart for a drafted price information input processing according to an embodiment.
Figs. 13A and 13B illustrate screens on a display of the drafter's PC during the drafted price information input processing.
Fig. 14 shows an example of program flowchart for a price information input processing according to an embodiment.
Figs. 15A and 15B illustrate screens on a display of the approver's PC during price approval information input processing according to an embodiment.
Fig. 16 shows an example of program flowchart for a price information browse processing according to an embodiment.
Fig. 17 illustrates an example of HTML file for a browsing screen according to an embodiment.
Fig. 18A illustrates a user information entry screen during a user information input processing according to an embodiment.
Fig. 18B illustrates a browsing screen of the drafter's PC during the price information browse processing.
Fig. 18C illustrates an example of browsing screen of the approver's PC during the price information browse processing.
Fig. 19 shows an example of program flowchart for an e-mail sending processing.
Fig 20 illustrates an example of an e-mail source code according to an embodiment.
Fig. 21 illustrates a schematic diagram of the process for retrieving contents of items form the price information database 110 and generating a mail record on the basis of the "items to be included in mail" and "items priority" stored on the security setting table 150 according to an embodiment.
Fig. 22 illustrates an example of an approval status notifying e-mail screen for the mobile phone according to an embodiment.
Fig. 23 illustrates an example of an approval status notifying e-mail according to second embodiment.
Fig. 24 shows an example of program flowchart for the an approval status notifying e-mail generating processing according to second embodiment.
Fig. 25 shows an example of program flowchart for the approval status notifying e-mail generating processing according to second embodiment.
Fig. 26 shows a function block diagram of a price information managing system according to third embodiment.
Fig. 27 shows an example of program flowchart for a drafted price inputting processing according to third embodiment.
Fig. 28 illustrates a configuration example of table that stores a draft number and draft price setting by correlating with each other.
Fig. 29 illustrates a program flowchart for an approval status notifying e-mail browsing processing according to third embodiment.
Fig. 32 illustrates an example of approval status notifying e-mail.

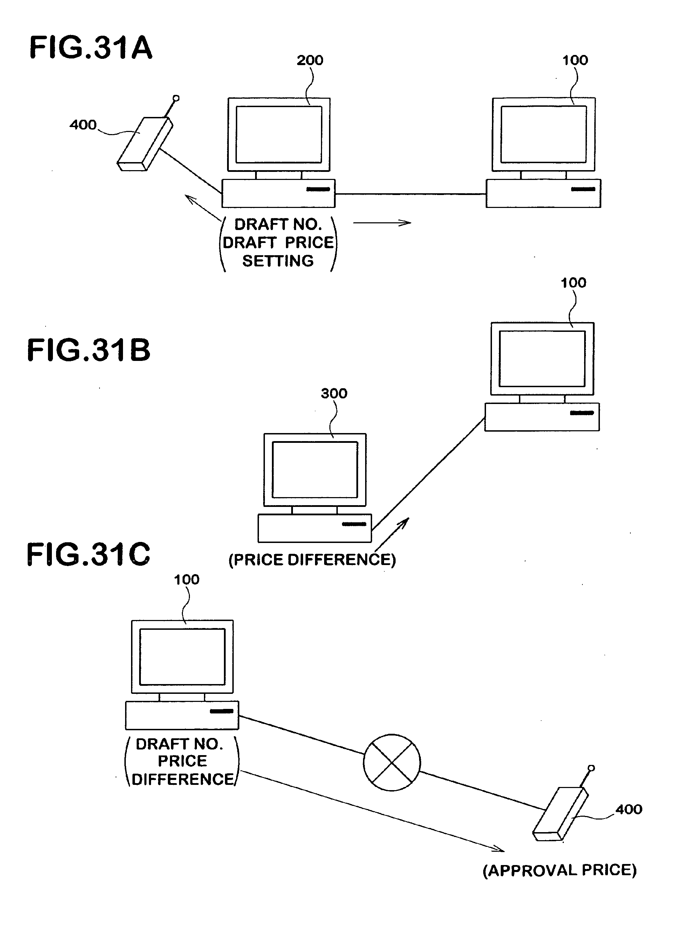

Fig. 31 illustrates an overview of processing according to third embodiment.

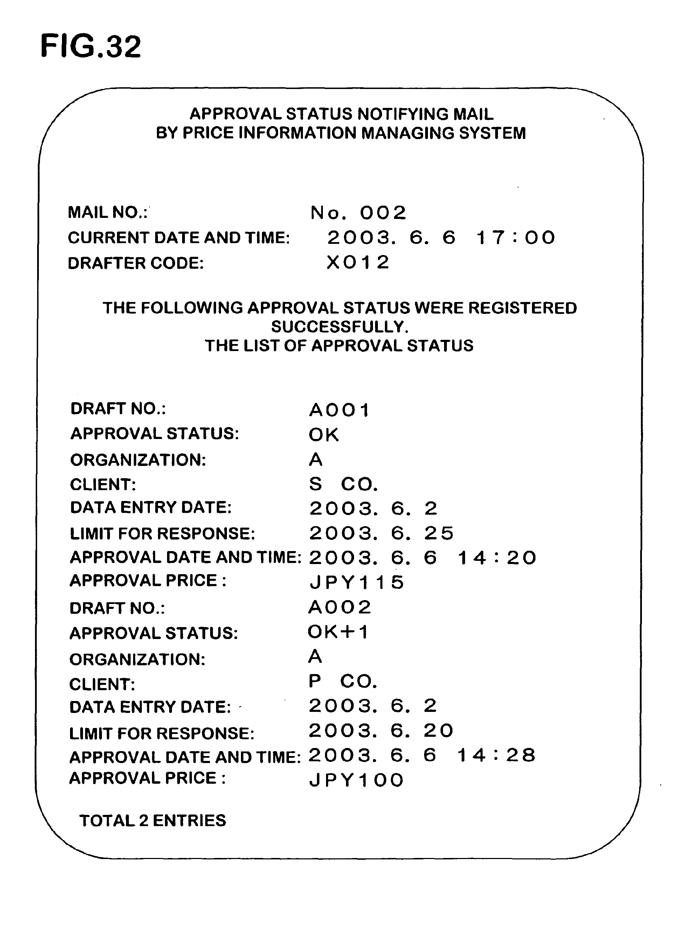

Fig. 32 illustrates an example of approval status notifying e-mail.

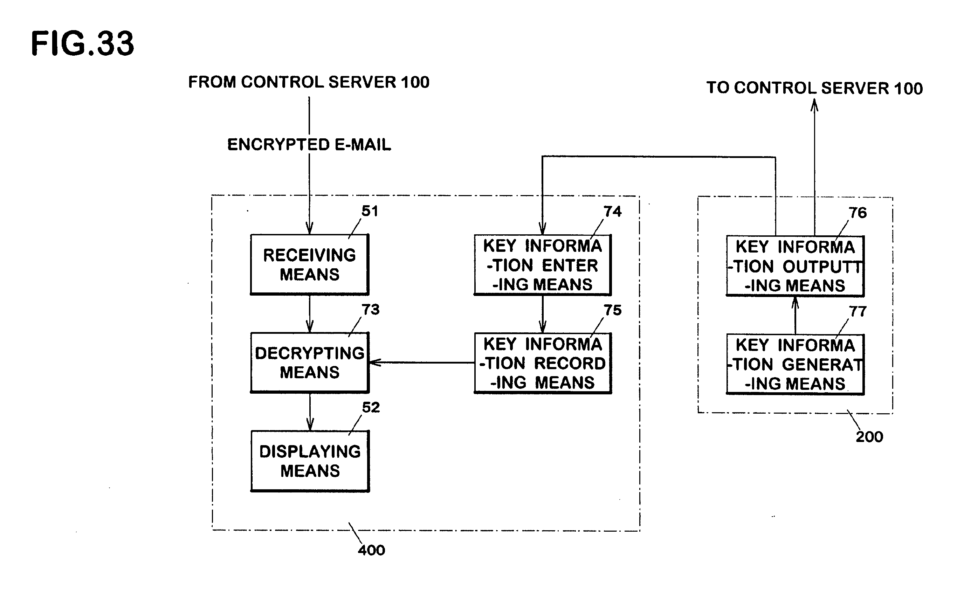

Fig. 33 shows a function block diagram of a price information managing system according to fourth embodiment.

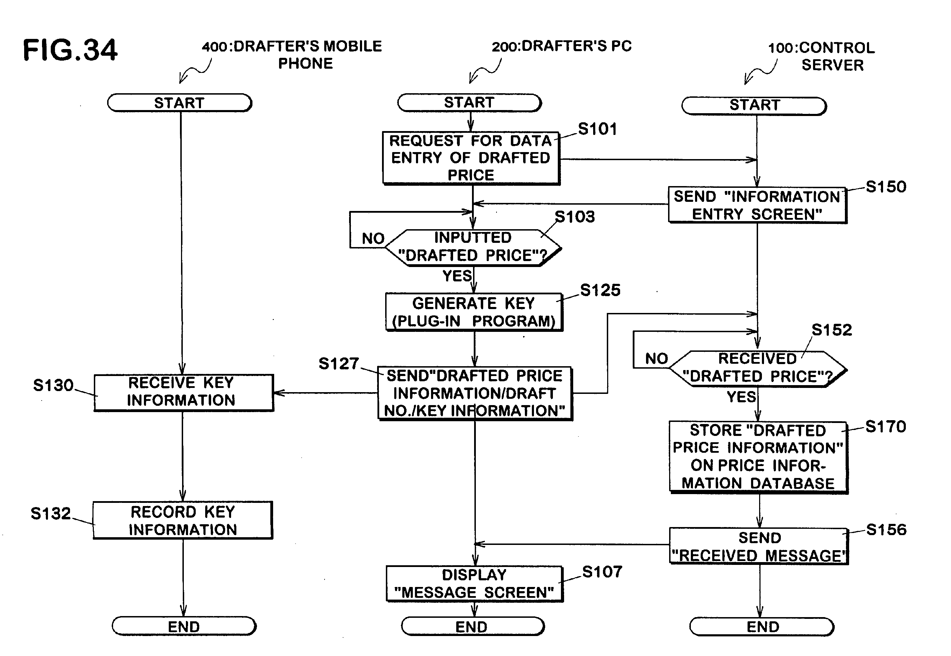

Fig. 34 shows an example of program flowchart for a drafting price inputting processing according to fourth embodiment.

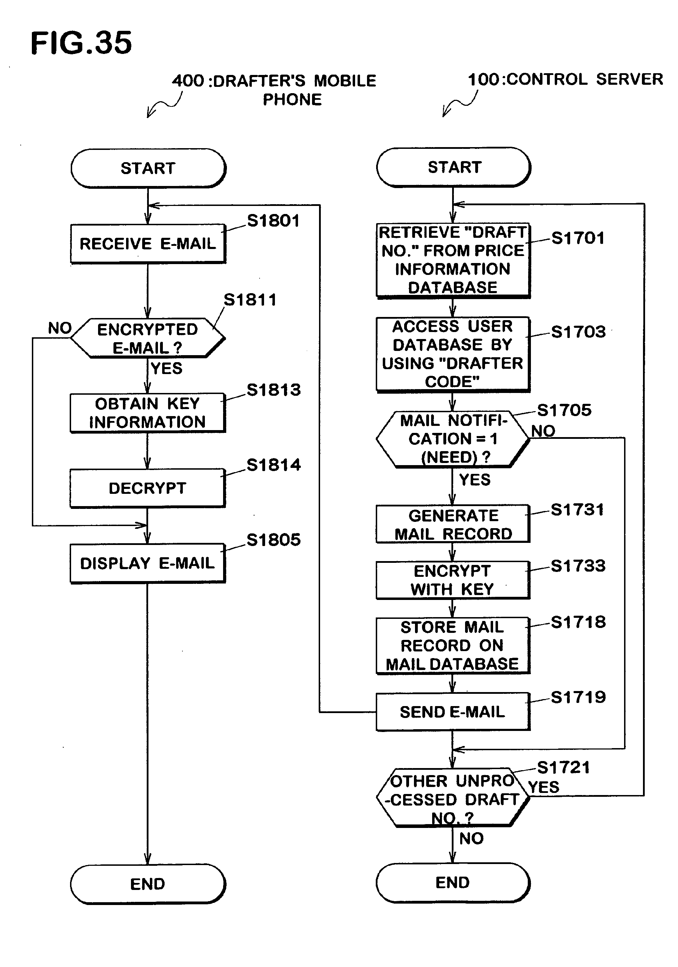

Fig. 35 shows an example of program flowchart for an approval status notifying e-mail sending/browsing processing according to fourth embodiment.

### DESCRIPTION OF THE PREFERRED EMBODIMENTS

As embodiments according to the present invention, "price information managing system" will be described below. The price information managing system is to maintain confidentiality of specific information and improve information accessibility for authorized persons. More specifically, the system enables an end device user within a closed Local Area Network (LAN) to browse detailed information including confidential information. On the other hand, the system transmits an information message in which the confidential information is modified to an end device user outside of the LAN so that only the user understand necessary information.

As embodiments of above-mentioned information, "product price information" drafted by a sales representative for delivering the product to a customer and "approval status information" provided by an approver in response to the price will be described below. In such case, the price information should be handled as confidential matter. Any information other than the price information such as the delivery pieces (pcs), the product specification, the estimated cost, or the settlement price is applicable to the present invention.

Table of Contents for the embodiments
1. An overview of the price information managing system
2. Devices
3. Embodiments and structures corresponding to terms in claims
4. Drafted price information input processing
5. Price approval information input processing
6. Price information browse processing
7. Approval status notifying e-mail sending processing
8. Advantages of the embodiments
9. Second embodiments
10. Third embodiments
11. Fourth embodiments
12. Other embodiments

### 1. A system architecture of the price information managing system

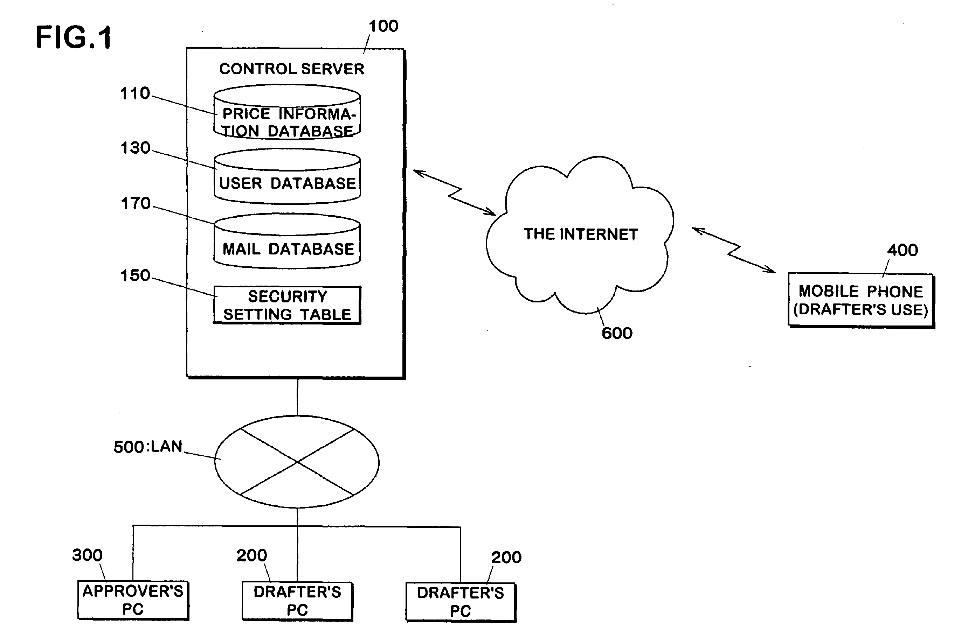

Fig. 1 shows a system architecture of the price information managing system which the present invention may be used. The price information managing system includes a control server 100, and drafter's personal computer(s) (PC)(or terminal device) 200 and an approver's PC 300 which are connected to the control server 100 through a local area network (LAN) 500. The system also includes a mobile phone 400 (or cellular phone) which is connected to the control server 100 through the Internet 600 (the Internet may include the Wireless Communication network). It is acceptable to have the firewall between the control server 100 and the Internet 600 in order to prevent unauthorized access to the control server 100.

The drafter's PC(s) 200 and mobile phone 400 are used by user(s) or drafter(s) who are responsible for drafting price for delivery in a certain organization or company. Mainly, the user(s) use the drafter's PC(s) 200 in the company building, while the user(s) use the mobile phone 400 outside of the building to receive an electronic mail (e-mail). In contrast, the approver's PC 300 is used by a user such as an approver, manager, superior, or boss, who is responsible for approving the price. This embodiment is intended to represent a situation where several drafters report to an approver and that situation reflects the structure of system shown in Fig. 1. That structure does not imply any restrictions as to the present invention.

The LAN 500 is to interconnect server machines and PCs within certain organization and is a network in a limited area. Therefore, the network among the control server 100, drafter's PC 200 and the approver's PC 300 do not include a public network, which is open to outside of the organization. (The term "public network" used herein does not include a network substantially work as dedicated line (or exclusive line) network such as a Virtual Private Network (VPN)). In other words, the network among the control server 100, the drafter's PC 200, and the approver's PC 300 includes a closed network where there is a rare possibility of being accessed from the public network.

The Internet 600 includes the public network connecting unspecified computers, wireless communication network, or the public mail server etc. located outside of the organization. Therefore, the network between the control server 100 and mobile phone 400 includes the public network.

The control server 100 stores the price information database 110, the user database 130, the security setting table 150, and the mail database 170. The contents of each database and table will be described later. The price information database 110, the user database 130, the security setting table 150, and the mail database 170 are stored on a hard disk and/or memory in the control server 100. In an alternative embodiment, the database and table are stored on a device etc. other than the control server 100.

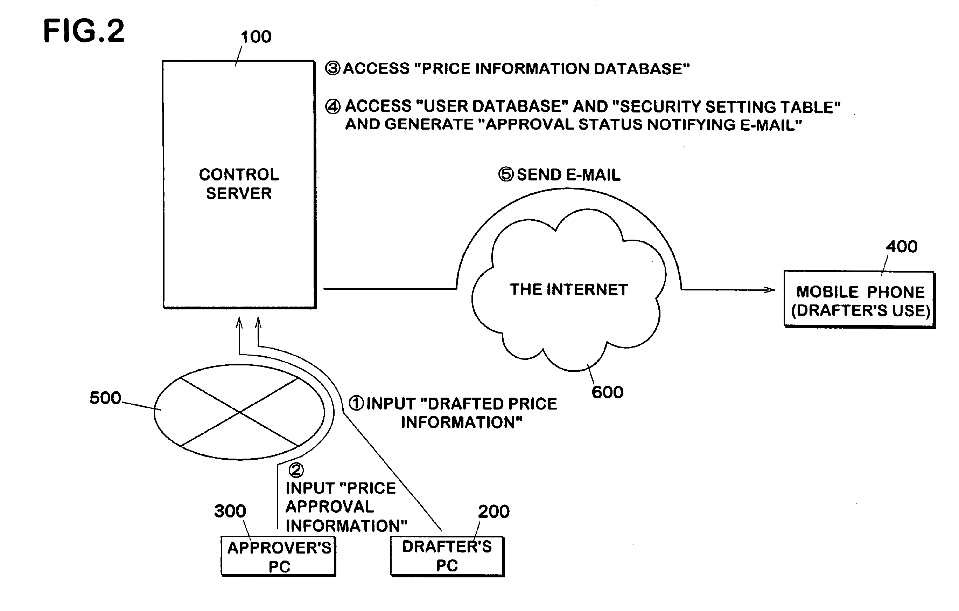

Fig. 2 shows an overall process of the price information managing system. The drafter's PC 200 logs on to the control server 100 through the LAN 500 and inputs the drafted price information (step 1). The approver's PC 300 logs on to the control server 100 through the LAN 500 and inputs the price approval information in response to the drafted price (step 2). The drafted price information and approval information are stored on the price information database 110 in the control server 100. The users of the drafter's PC 200 and approver's PC 300 can browse the information stored on the price information database 110 through the LAN 500. The control server 100 accesses to the price information database 110 (step 3). The control server 100 accesses to the user database 130 and security setting table 150, and generates the approval status notifying e-mail based on the information stored on the price information database 110 (step 4). The approval status notifying e-mail includes the approval status information but the price information. The control server 100 sends the e-mail to the drafter's mobile phone 400 through the Internet 600 (step 5). The drafter understands whether the drafted price was approved or not based on contents of the e-mail. Further details of the steps shown in Fig. 2 will be explained below.

In the embodiment, a dedicated software (application), which is to show the contents of the price information database 110 to the drafter's PC 200 and approver's PC 300 on the LAN 500, is used for the control server 100. Alternative software such as Microsoft's FrontPage™ can be used to implement the process described herein. Also, the commonly-used mail software for sending the e-mail is used for the control server 100. An alternative e-mail software can be used to implement the process described herein.

### 2. Devices

### 2-1. Function block diagram

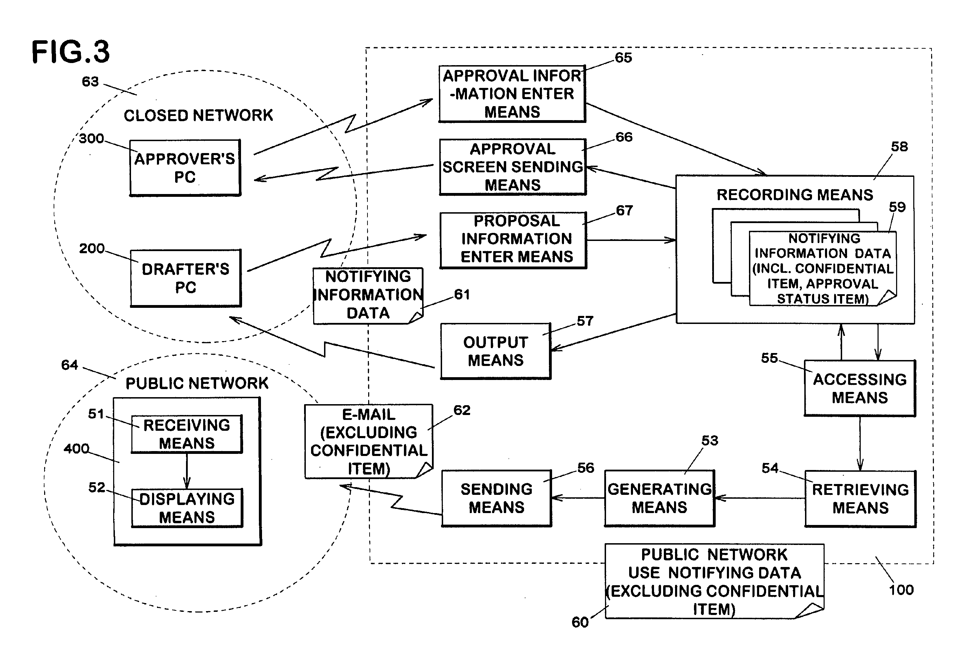

Fig. 3 shows a function block diagram of the price information managing system. The control server 100 includes the recording means 58 that stores proposal information, approval information, notifying information, and the like. The control server 100 includes the proposal information enter means 67 that enters the proposal information from the drafter's PC 200 into the recording means 58, the approval screen sending means 66 that generates an approval screen based on the proposal information and sends the approval screen to the approver's PC 300, the approval information enter means 65 that enter an approval information from the approver's PC 300 into the recording means 58, the accessing means 55 for accessing the recording means 58, the retrieving means 54 for retrieving certain items from the notifying information (which is the proposal information correlated with the approval information registered), the generating means 53 for generating an e-mail based on the items extracted, the sending means 56 for sending the e-mail 62, and the outputting means 57 for outputting the data.

The mobile phone 400 includes the receiving means 51 for receiving the e-mail and the displaying means 52 for displaying contents of the e-mail.

The recording means 58 registers the proposal information sent by the drafter's PC 200. When the recording mean 58 receives the approval information sent by the approver's PC 300 in response to the proposal information, the recording means 58 registers the approval information by correlating with the proposal information. The term "notifying information" used herein means the proposal information correlated with the approval information.

The notifying information data 59 includes a confidential item and an approval status item. The accessing means 55 accesses the notifying information data 59 stored on the recording means 58. The retrieving means 54 retrieves the public network use notifying data 60, which comprises an approval status item but the confidential item, from the notifying information data. The generating means 53 generates an e-mail based on the contents of the notifying data 60. The sending means 56 sends the e-mail to the mobile phone 400 within the public network 64. The receiving means 51 of mobile phone 400 receives the e-mail. The displaying means 52 displays the contents of e-mail.

The output means 57 outputs the contents of the notifying data 60 stored on the recording means 58 to the drafter's PC 200 within the closed network 63.

### 2-2. Control server

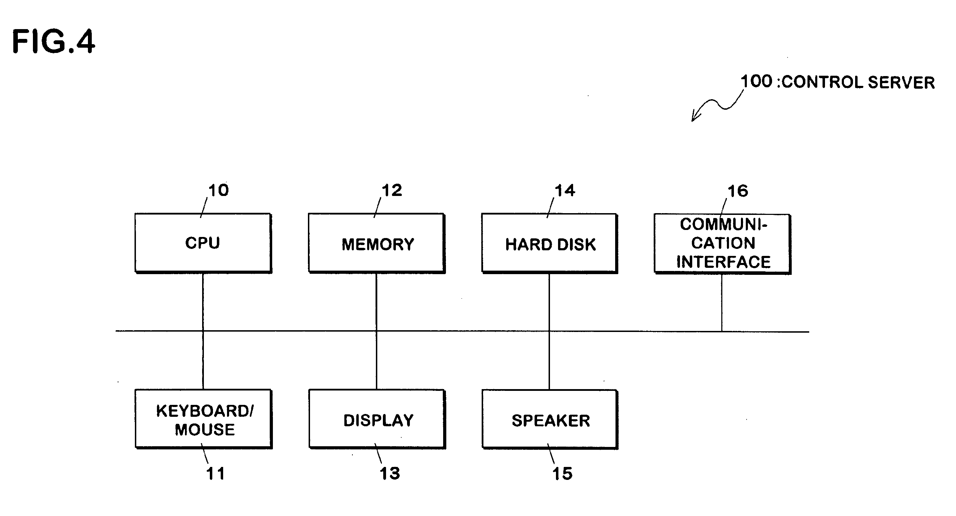

Fig. 4 illustrates a hardware configuration example of the control server 100 shown in Fig. 3 by use of a central processing unit (CPU). The control server 100 includes CPU 10, keyboard/mouse 11, memory 12, display 13, hard disk 14, speaker 15, communication interface 16 for connecting to the LAN 500 and the Internet 600.

The CPU 10 controls operations of control server 100. The memory 12 acts as a storage area for data processing of CPU 10. The hard disk 14 stores the price information database 110, user database 130, security setting table 150, an operating system, and a computer program for CPU 10 to execute. Inputting information from keyboard/mouse 11 is inputted to CPU 10 and CPU 10 generates display information and/or sound information for display 13 and/or speaker 15 to output.

### 2-3. Drafter's PC

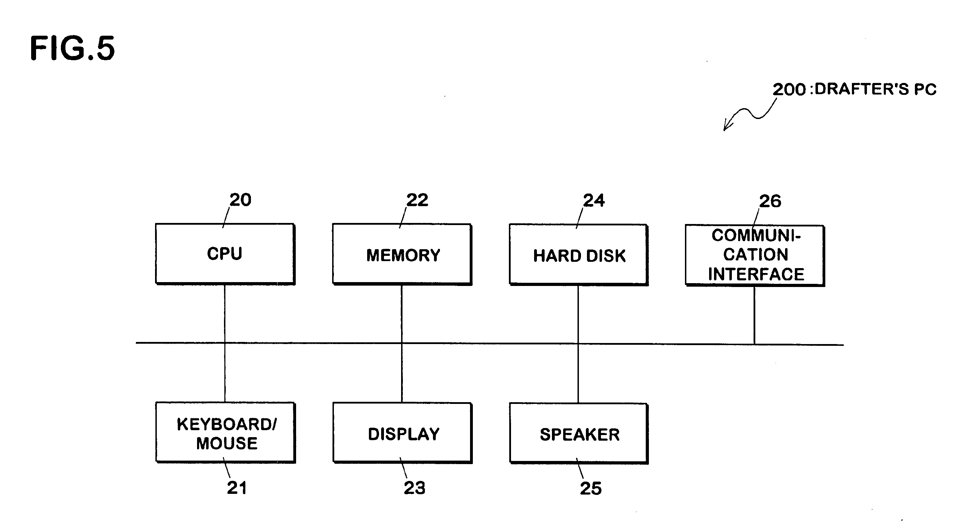

Fig. 5 illustrates a hardware configuration example of drafter's PC 200 by use of a CPU. The drafter's PC 200 includes CPU 20, keyboard/mouse 21, memory 22, display 23, hard disk 24, speaker 25, communication interface 26 for connecting to the LAN 500 or the like.

The CPU 20 controls operations of drafter's PC 200. The memory 22 acts as a storage area for data processing of CPU 20. The hard disk 24 stores an operating system and a computer program for CPU 20 to execute. Inputting information from keyboard/mouse 21 is inputted to CPU 20 and CPU 20 generates display information and/or sound information for display 23 and/or speaker 25 to output.

### 2-4. Approver's PC

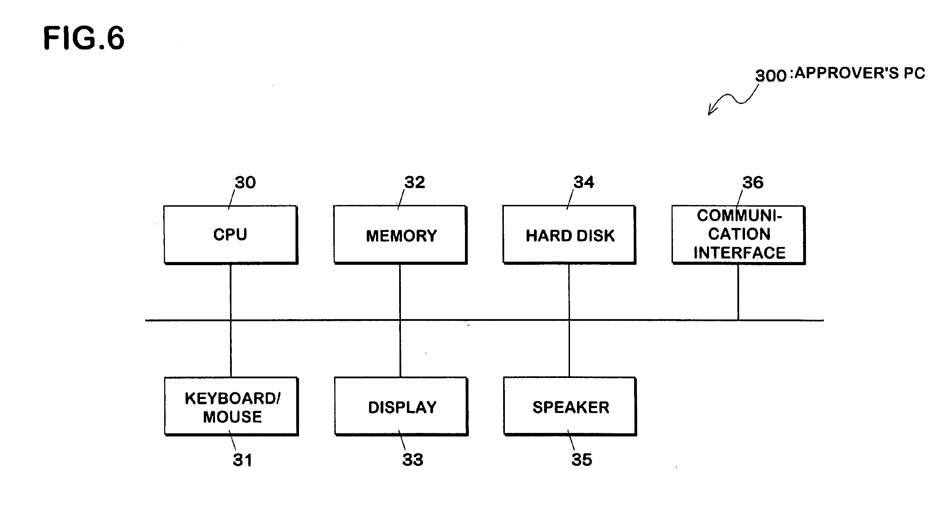

Fig. 6 illustrates a hardware configuration example of approver's PC 300 by use of a CPU. The approver's PC 300 includes CPU 30, keyboard/mouse 31, memory 32, display 33, hard disk 34, speaker 35, communication interface 36 for connecting to the Internet 400 or the like. Each hardware function is similar to each hardware of the drafter's PC 200 shown in Fig. 5.

### 2-5. Mobile phone

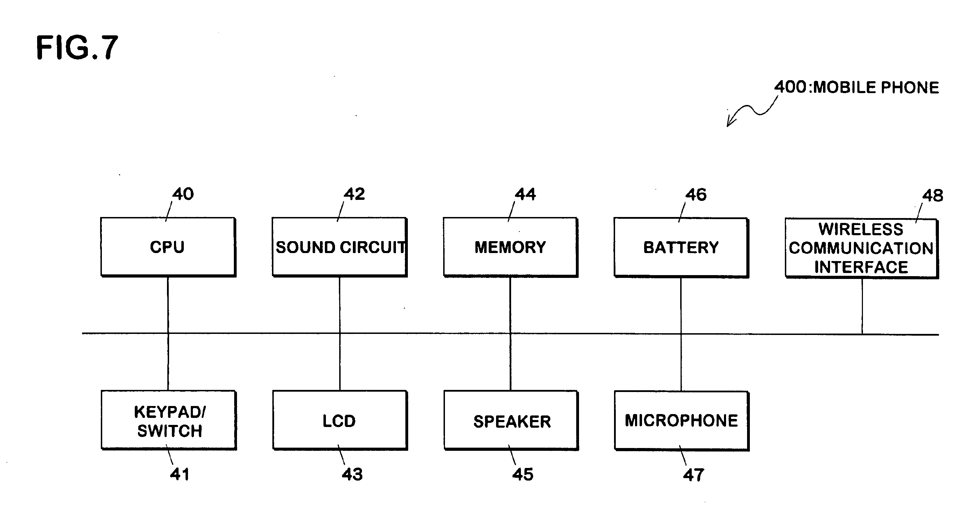

Fig. 7 illustrates a hardware configuration example of mobile phone 400 shown in Fig. 3 by use of a CPU. The mobile phone 400 includes CPU 40, keypad/switch 41, sound circuit 42, liquid crystal display (LCD) 43, memory 44, speaker (for communication/ for incoming call) 45, battery 46, microphone 47, wireless communication interface 48 for connecting to the Internet 600 or the like.

The CPU 40 controls operations of mobile phone 400. The memory 44 acts as a storage area for data processing of CPU 40 and stores a computer program for CPU 40 to execute, the phone's operating system, an e-mail program, user information, phone directory or the like. Inputting information from keypad/switch 41 is inputted to CPU 40 and CPU 40 generates display information and/or sound information for LCD 43 and speaker 45 to output. The sound circuit 42 encodes audio signal from microphone 47 for sending, and decodes information encoded for speaker 45 to output. The wireless communication interface 48 is to send and receive audio signal, voice signal, and e-mail data. The battery provides a supply of electricity for each hardware.

In the embodiments, an example of operation system of the control server 100, drafter's PC 200, and approver's PC 300 is Microsoft's Windows™ XP, NT, 2000, or the like. In the embodiments, the computer program works with the operation system. For alternative embodiments, the computer program works without the operation system.

### 2-6. Database

The followings are configuration examples of the database. In the price information managing system, the control server 100 includes the price information database 110, user database 130, and security setting table 150.

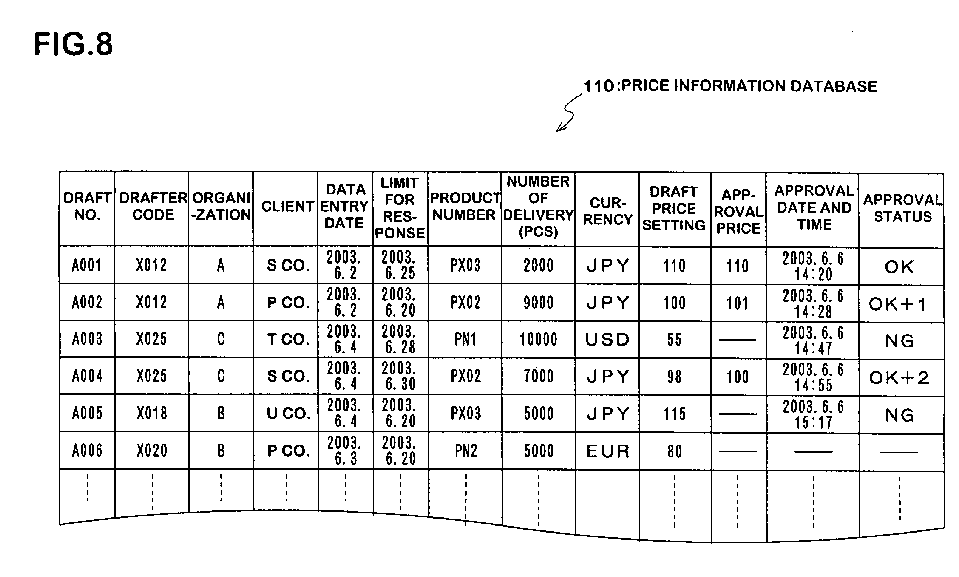

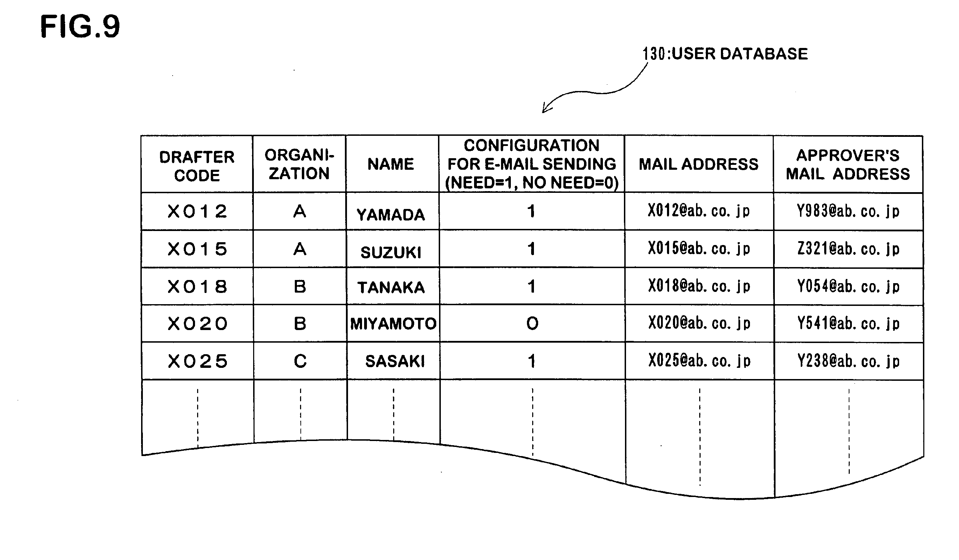

Fig. 8 illustrates a configuration example of the price information database 110 stored on hard disk 14 (or memory 12) in the control server 100. The price information database 110 maintains information inputted from the drafter's PC 200 and approver's PC 300. As shown in the Fig. 9, information related with the drafting price is correlated with each draft number in database 110. The price information database 110 maintains drafted information from the drafter and approval status information in response to the drafted information from the approver. The drafted information includes "draft number" for identifying each draft, "drafter code" for identifying drafter, drafter's "organization", "client" (or customer), "data entry date" of the draft, "limit for response" for the draft, "product number", "number of delivery (pcs)", "currency" (any currency such as Japanese yen and U.S. dollars is applicable), and "draft price setting". The approval status information includes "approval price" from the approver, "response time", and "approval status".

Fig. 9 illustrates a configuration example of the user database 130 stored on the hard disk 14 (or memory 12) in the control server 100. The user database 130 maintains "drafter code", "organization", "drafter name", "configuration for notifying e-mail", "mail address" of mobile phone, and "mail address" of the approver. The configuration for e-mail sending is for each user to customize whether approval status notifying e-mail is required or not, and 1 means required the e-mail sending and 0 means not required. For example, if user is a sales representative for clients, the configuration would be 1. As shown in the Fig. 9, "Yamada" with drafter code "X012" belongs to organization "A" and he will be receiving the approval status notifying e-mail at "X012@ab.co.jp".

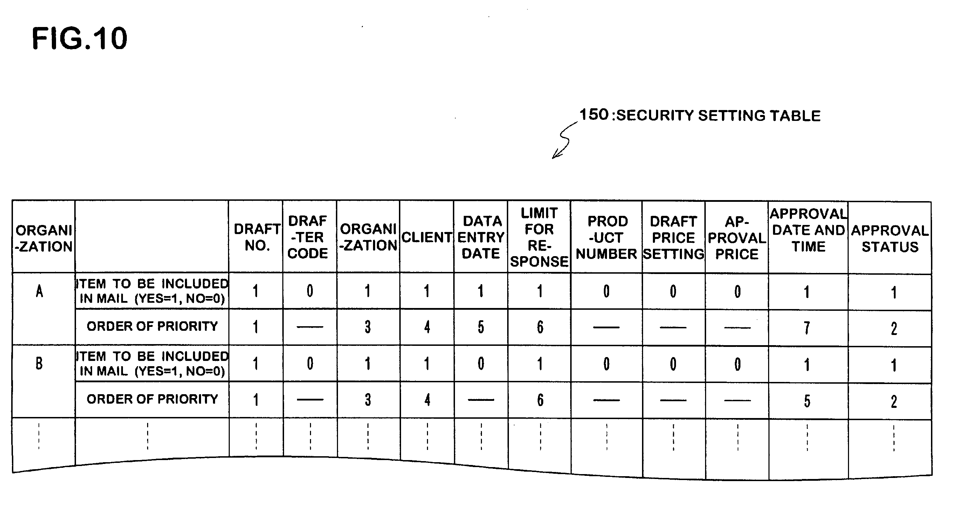

Fig. 10 illustrates a configuration example of the security setting table 150 stored on the hard disk 14 (or memory 12) in the control server 100. The security setting table 150 maintains information for items to be included in the approval status notifying e-mail from the items in the price information database 110. In the embodiments, each organization customizes the security setting individually. In the table 150, "1" means items to be included from corresponding items of the price information database 110 and "0" means item not to be included. Furthermore, the security setting table 150 maintains information for items priority. The items priority defines order of each item's priority in the approval status notifying e-mail. For example, as shown in the Fig. 10, the contents of the e-mail for organization "A" will be in order of "draft number", "approval status", "organization", "clients", "data entry date", "limit for response", and "response time".

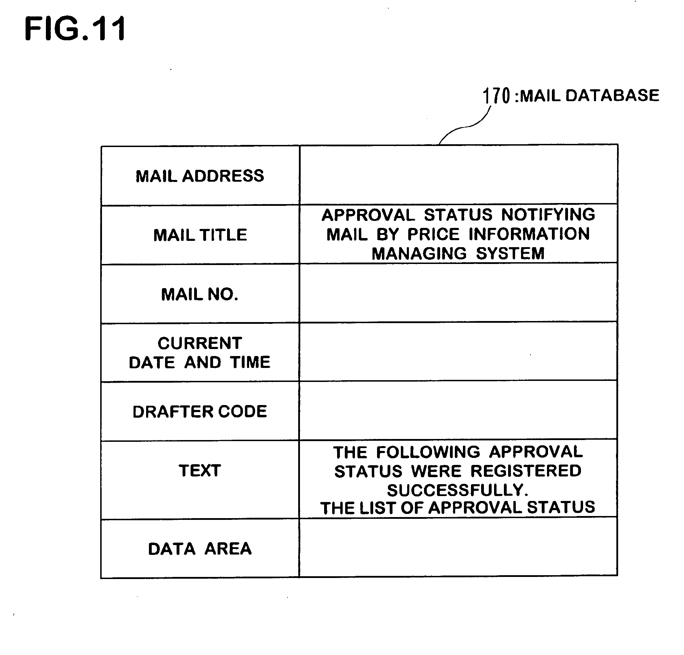

Fig. 11 illustrates a configuration example of the mail database 170 stored on the hard disk 14 (or memory 12) in the control server 100. The mail database 170 stores e-mail templates and e-mail record generated. Further details of the database 170 shown in Fig. 11 will be explained below.

### 3. Embodiments and structures corresponding to terms in claims

Embodiments and structures corresponding to the terms used in the claims will be explained as follows. Structure and embodiment defined by the term provides certain function, and the following corresponding is explained so as to provide an instance of the function.

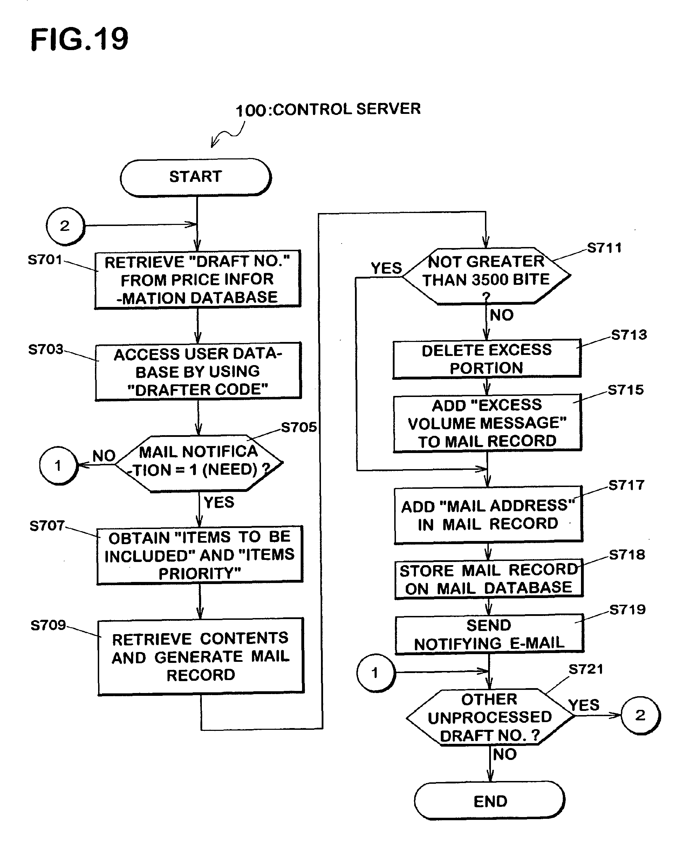

"Approval status notifying device" corresponds to the control server 100. "User device" corresponds to the drafter's PC 200, approver's PC 300 and/or mobile phone 400. "Notifying data" corresponds to the data stored on the price information database 110 shown in Fig. 8. "Confidential item" corresponds to the draft price setting stored on the price information database 110. "Proposal information" corresponds to data included in the price information database 110 and the data are inputted from the drafter's PC 200. "Approval status item" corresponds to the approval status in the price information database 110. "Approval information" corresponds to data included in the price information database 110 and the data are inputted from the approver's PC 300. "Accessing means" (means for accessing) corresponds to the CPU 10 of control server 100 accessing the price information database 110 at step 701 in Fig. 19.

"Public network use notifying data" corresponds to an e-mail record generated by the CPU 10 at step 709 in Fig. 19. "Generating means" (means for generating an e-mail) corresponds to the CPU 10 executing process at step 709 and 717 in Fig. 19. "Sending means" (means for sending) corresponds to the CPU 10 executing process at step 719 in Fig. 19.

"Receiving means" (means for receiving) corresponds to the CPU 40 of mobile phone 400 receiving an e-mail which is sent at step 19 in Fig. 19. "Displaying means" (means for displaying) corresponds to the CPU 40 outputting the contents of the e-mail to LCD 43 and the e-mail is sent at step 719 in Fig. 19.

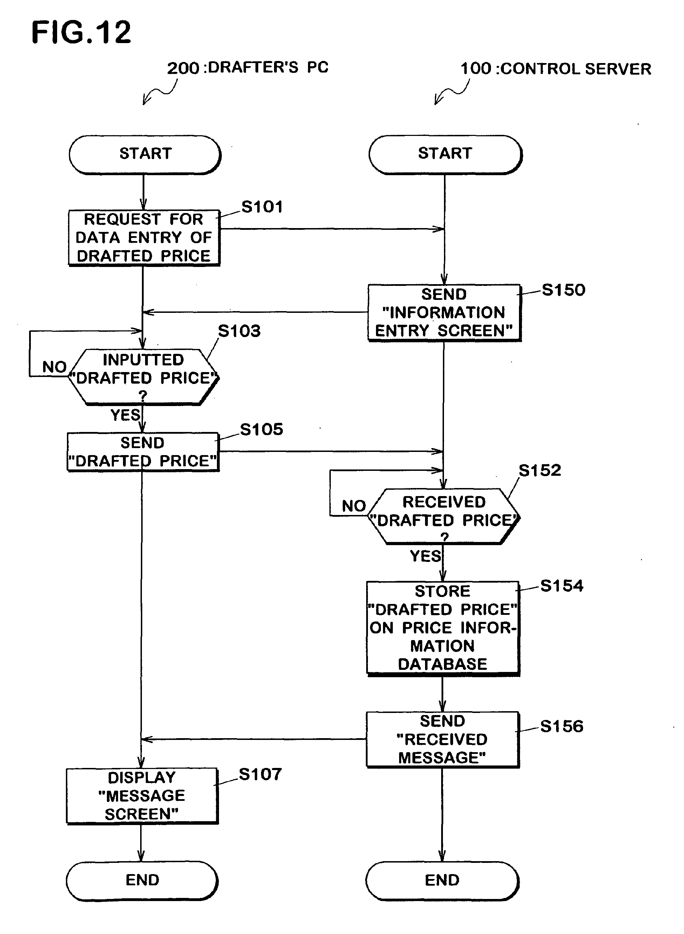

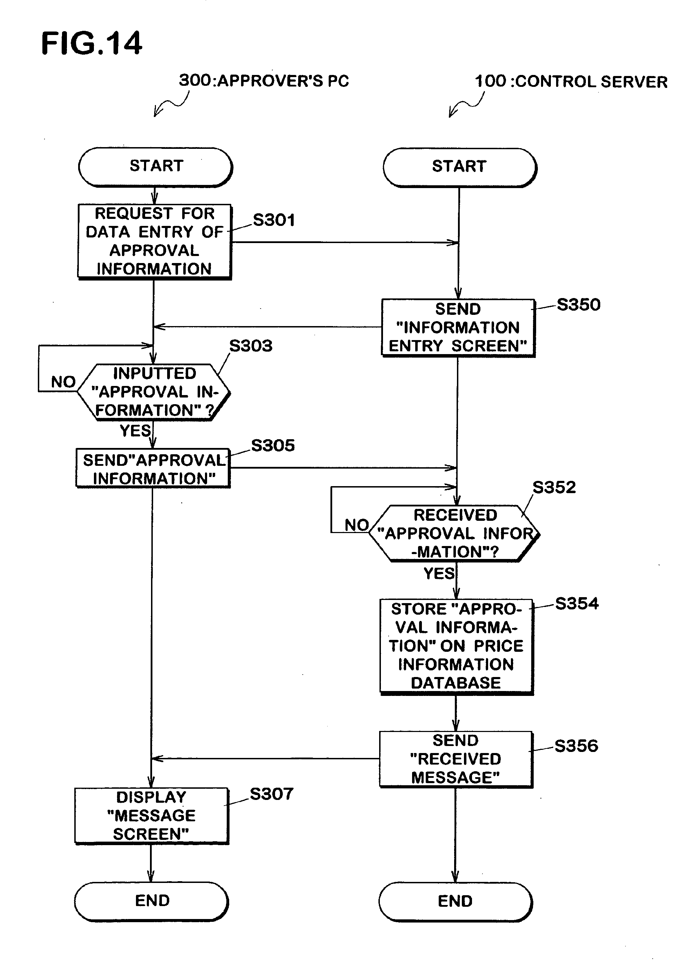

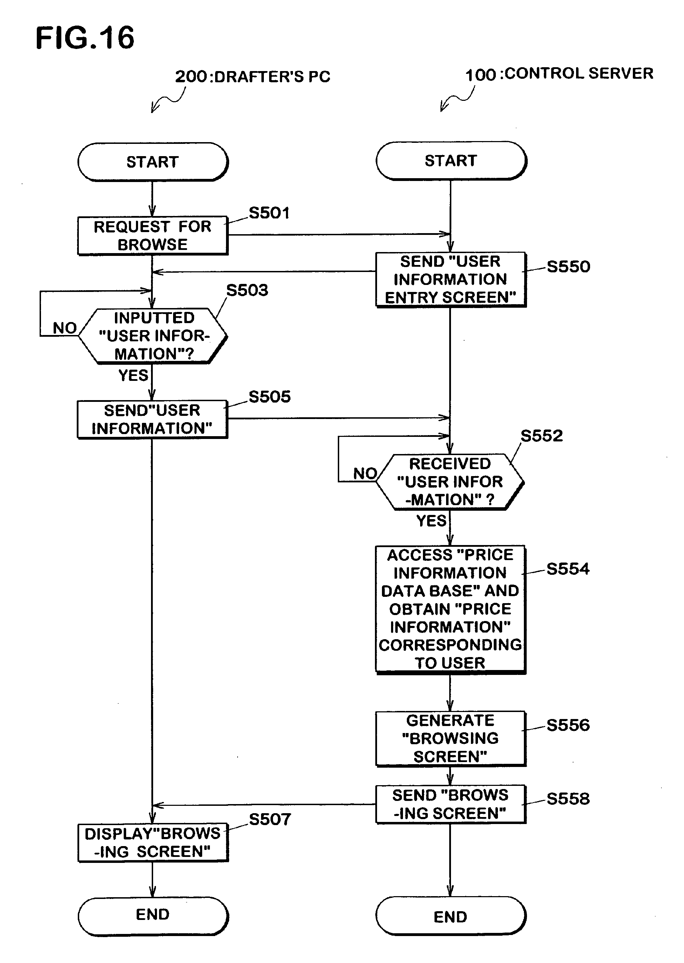

"Inputting means" (means for inputting) corresponds to the hard disk 14 (or the memory 12) in the control server 100. "Notifying information data storing means" (means for storing a notifying information data) corresponds to the CPU 10 executing process at step 154 in Fig. 12 or at step 354 in Fig. 14. "Outputting means" (means for outputting) corresponds to the CPU 10 executing process at step 558 in Fig. 16. "Priority order information" corresponds the security setting table 150 shown in Fig. 10.

"Drafted price information" corresponds to the draft price setting included in the price information database 110. "Approval status information for the price" corresponds to the approval status included in the price information database 110. "Price difference information between the drafted price and approvable price" corresponds to the approval status in conditional approval case. For example, when X is calculated by subtracting the drafted price from the approvable price, the price difference information includes the value of X such as +1 (or plus 1) and -2 (or minus 2), or combination of OK (or approved) and X such as "OK +1" and "OK -2".

### 4. Drafted price information input processing

As one embodiment of the price information managing system, drafted price information input processing, where the drafter's PC 200 logs on to the control server 100 and inputs the drafted price information, will be explained below. Fig. 12 shows an example of program flowchart for each device CPU to execute the drafted price information input processing.

The CPU 20 of drafter's PC 200 starts the software (application) and makes a request for data entry of the drafted price information (step 101). The CPU 10 of control server 100 sends a drafted price information entry screen to the drafter's PC 200 (step 150).

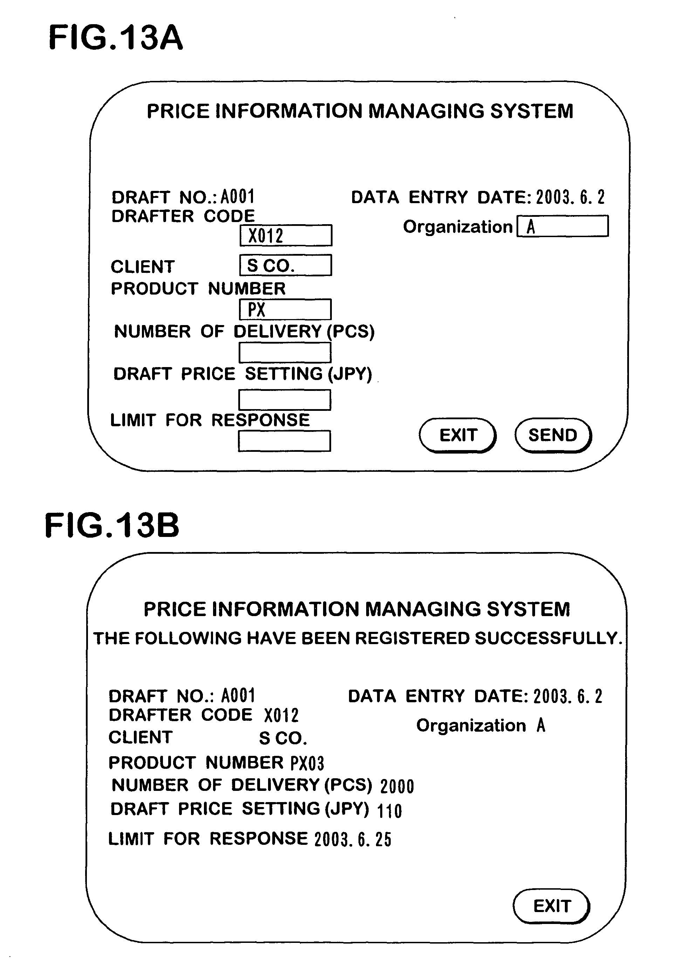

Fig. 13 illustrates a screen on the display 23 of drafter's PC 200 during the drafted price information input processing. Fig. 13A illustrates the drafted price information entry screen. The user of drafter's PC 200 then enters the drafted price information. As shown in the Fig. 13A, entry items includes "drafter code", "organization", "client", "product number", "number of delivery", "draft price setting" that is the price for delivery, and "limit for response". The draft number shown in Fig. 13A is to identify each drafted price information and the CPU 10 assigns the number.

The CPU 20 determines whether the drafted price information was inputted based on user operation such as clicking on the "send" button shown in Fig. 13 (step 103). If the information was inputted, then the CPU 20 sends the information to the control server 100 (step 105).

The CPU 10 determines whether the drafted price information was received (step 152). If the information was received, then the CPU 10 stores the information on the price information database 110 (step 154). For the purpose of illustrations, the following steps will be explained assuming that the information corresponds to draft code "A001" in the Fig. 8 was inputted. For "data entry date", the CPU 10 saves date and time of executing the step 152. Approval status information such as "approval price", "response time", and "approval status" will not be recorded until step 154. For alternative embodiments, after step 152, the CPU 10 determines whether the entry data of information received included certain error(s). If the entry data included error(s), the CPU 10 sends an error message to the drafter's PC 200 and requests reentry of drafted price information.

The CPU 10 sends a received message to the drafter's PC 200 (step 156) and completes its tasks. The CPU 20 displays the message on the display 23 (step 107) and completes its tasks. Fig. 13B illustrates the message screen at step 107.

### 5. Price approval information input processing

As one embodiment of the price information managing system, a price approval information input processing, where the approver's PC 300 logs on to the control server 100 and inputs price approval information, will be explained below. Fig. 14 shows an example of program flowchart for each device CPU to execute the price information input processing.

The CPU 30 of the approver's PC 300 starts the software (application) and makes a request for data entry of the price approval information (step 301). The CPU 10 of the control server 100 sends a price approval information entry screen to the approver's PC 300 (step 350).

For alternative embodiments, before step 301, the control server 100 notifies the approver's PC 300 that certain drafted price information were registered. For example, the CPU 10 sends an e-mail (drafted price notifying e-mail), which is to notify that certain drafted price information were registered in the price information database, to the approver's PC 300 after step 156 in Fig. 12 or before step 350 in Fig. 14. Receivers of the e-mail are registered users in the price information managing system, or are limited users such as approvers concerned with the drafter. The CPU 10 obtains the email address from the user database 130 in Fig. 9. For example, in Fig. 9, the approver for drafter code of "X012" has an e-mail address of "Y983@ab.co.jp".

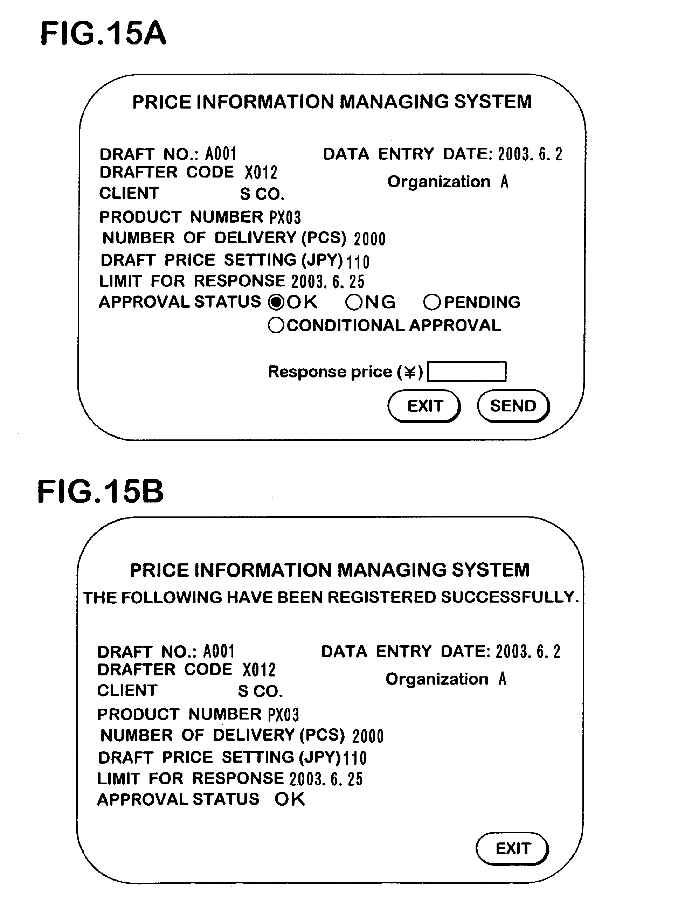

Fig. 15 illustrates a screen on the display 33 of approver's PC 300 during price approval information input processing. Fig. 15A illustrates the price approval information entry screen that is sent at step 350. The user of approver's PC 300 then enters the price approval information. As shown in Fig. 15A, the display 33 displays data entry screen for "approval status" and "approval price". For the approval status, if the approver approves the draft price (price for delivery), the approver checks the box of "OK". If the approver does not approve the draft price, the approver checks the box of "NG". If the approver holds the decision, the approver check the box of "PENDING". For the purpose of illustrations, the following steps will be explained assuming that the box of "OK" was checked. The contents of entry data at step 303 in Fig. 14 are not limited to the embodiment described here. For alternative embodiments of the approval status, for example, text data stating a reason for "NG", pending limit for "PENDING", etc. can be applied.

Furthermore, the approver can check the box of "conditional approval" in the case in which the approver has an idea of approvable temporary price other than the draft price. If the approver checks the box of "conditional approval", it should be required to enter the "temporary price" in the box of approval price on the screen. For example, as shown in Fig. 8, entry data for draft number of "A002" is "OK +1 (or OK plus 1)", and that means the approver enters a conditional approval with "101 YEN (Japanese yen)" as a temporary price in response to a draft price of "100 YEN", which was drafted by drafter's code of "X012". In the case of the conditional approval, at step 354 as described below, the CPU 10 calculates a value of X by the equation, X=(approval price, or temporary price) - (draft price) , which means obtaining difference between the approval price and draft price. The CPU 10 then stores both "OK" and the calculated "X" in the column for "approval status" in the price information database 110 shown in Fig. 8. For example, the approver enters a conditional approval with "98 YEN" in response to a draft price of "100 YEN", approval status should be "OK -2 (or OK minus 2)".

The CPU 30 determines whether the approval information was inputted based on user operation such as clicking on the "send" button shown in Fig. 15A (step 303). If the information was inputted, then the CPU 30 sends the information to the control server 100 (step 305).

The CPU 10 determines whether the approval information was received (step 352). If the information was received, then the CPU 10 stores the information on the price information database 110 (step 354). For the purpose of illustrations, the following steps will be explained assuming that an approval information corresponds to draft number of "A001" in the Fig. 8 was inputted. The approval status such as "OK" ("NG", or "PENDING", or the like), "response time", "approval price" are stored on the price information database 110 with that processing. In the case in which the approver checked the box of "OK", the CPU 10 stored a price that is identical with "draft price" in "approval price" column. The CPU 10 records the execution time of step 352 in "response time" column.

The CPU 10 sends a received message to the approver's PC 300 (step 356) and completes its tasks. The CPU 30 displays the message on the display 33 (step 307) and completes its tasks. Fig. 15B illustrates the message screen at step 307.

### 6. Price information browse processing

As one embodiment of the price information managing system, a price information browse processing, where the drafter's PC 200 or the approver's PC 300 logs on to the control server 100 and browse (or view) the information stored on the price information database 110, will be explained below. Fig. 16 shows an example of program flowchart for each device CPU to execute the price information browse processing. As one embodiment, an execution example of which the drafter's PC 200 logs on to the control server 100 will be described below, and that execution is applicable in the case in which the approver's PC 300 logs on to the control server 100.

The CPU 20 of the drafter's PC 200 starts the software (application) and makes a request for browse of the price information database 110 to the control server 100 (step 501). The CPU 10 of the control server 100 sends a user information entry screen to the drafter's PC 200 (step 550).

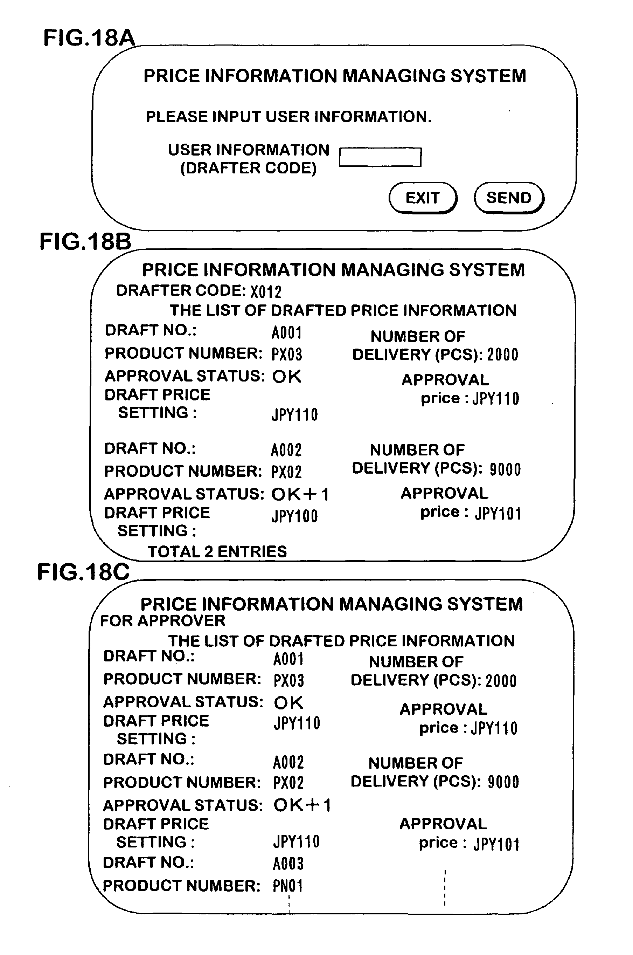

Fig. 18 illustrates a screen on the display 23 of drafter's PC 200 during price information browse processing. Fig. 18A illustrates the user information entry screen at step 550. The user of drafter's PC 200 then enter the drafter code as the user information in reference to the entry screen shown in Fig. 18A. For the purpose of illustrations, the following steps will be explained assuming that the drafter code of "X012" was inputted.

The CPU 20 determines whether the user information was inputted based on user operation such as clicking on the "send" button shown in Fig. 18A (step 503). If the information was inputted, then the CPU 20 sends the information to the control server 100 (step 505).

The CPU 10 determines whether the user information was received (step 552). If the information was received, the CPU 10 accesses to the price information database 110 shown in Fig. 8. The CPU 10 obtains drafted price information corresponding to the user, and stores the information on the memory 12 etc. (hereafter referred to as "memory 12")(step 554). For the purpose of illustrations, the following steps will be explained assuming that the CPU 10 obtains the drafted price information corresponding to drafter code of "X012" shown in Fig. 8. The drafted price information related to draft number of "A001" and "A002", which corresponds to the code of "X012", are obtained with that processing. More specifically, the price information includes organization, client, data entry date, limit for response, product number, number of delivery (pcs), draft price setting, approval price, response time, and approval status. The price information are stored in each column in the price information database 110. When the approver's PC 300 has not inputted the approval price, response time, and approval status, the CPU 10 does not obtain those information at step 554.

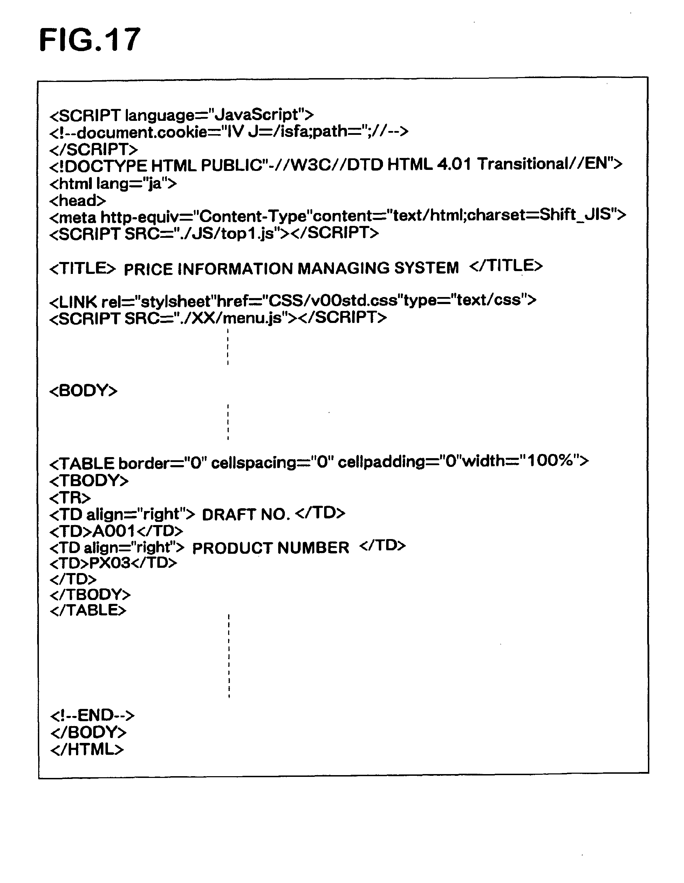

The CPU 10 generates a browsing screen based on the price information stored on the memory 12 at step 554 (step 556). A well-known computer program is applicable for generating the browsing screen at step 556. In the embodiments, the CPU 10 generates a Hyper Text Markup Language (HTML) file (or HTML page) as the browsing screen. More specifically, at step 556, the CPU 10 of control server 100 generates a HTML file based on the price information stored on the memory 12 at step 554. With respect to that HTML file generating process, for example, a HTML format used as a template for generating the HTML file and a style sheet which defines the layout of browsing screen are pre-stored on the hard disk 14 etc. in the control server 100. The CPU 10 generates the HTML file by importing each item of the price information into the HTML format. Fig. 17 illustrates an example of HTML file for the browsing screen. Processing for generating the browsing screen including the layout definition is not limited described here, and other well-known techniques are applicable.

The CPU 10 sends the screen to the drafter's PC 200 (step 558) and completes its tasks. The CPU 20 displays the screen received on the display 23 (step 507) and completes its tasks. The CPU 20 displays the screen by interpreting the HTML file and the style sheet.

Fig. 18B illustrates the browsing screen on the display 23 at step 507. As an example, information related to draft number of "A001" and "A002", which corresponds to drafter code of "X012", are displayed. More specifically, product number, number of delivery (pcs), approval status, draft price setting, approval price, etc. are displayed with respect to individual draft number.

Fig. 18C illustrates an example of browsing screen on the display 33 at step 507 in the case in which the approver's PC 300 logs on to the control server 100 for browsing the price information. In Fig. 18C, as an example, the price information related to "A001", "A002", "A003", etc. are displayed since the approver is responsible for reviewing all the drafter registered in the price information database 110 shown in Fig. 8. Alternatively, in the case in which there are several approvers, the system assigns an approver code for each approver, and stores the code on the price information database 110 by correlating with individual draft number according to each approver's responsibility. For that embodiment, the CPU 30 of approver's PC 300 sends the approver code to the control server 100 at step 503 in Fig. 16. The CPU 10 then obtains the price information based on the approver code at step 554 in Fig. 16.

With the information shown in Fig. 18B and/or Fig. 18C, the users of drafter's PC 200 and/or approver's PC 300 can check the complete information regarding the draft price, the approval status, and the like. In the above-mentioned embodiments, the users can browse their own drafted price information. For an alternative embodiment, the control server 100 makes the price information available to users within the same organization. More specifically, if the user of drafter code "X012" requests the browsing of the price information, the CPU 10 generates a browsing screen including price information drafted by drafter code of "X015" as well as "X012" by utilizing data stored on the user database 130 shown in Fig. 9. In this case, the CPU 10 verifies that both "X015" and "X012" belong to same organization with the information in "organization" column.

### 7. Approval status notifying e-mail sending processing

As one embodiment of the price information managing system, an approval status notifying e-mail sending processing, where the control server 100 sends an approval status notifying e-mail to the mobile phone 400, will be explained below. Fig. 19 shows an example of program flowchart for the CPU 10 of control server 100 to execute the e-mail sending processing. As one embodiment, the CPU 10 executes the program once every one hour. For alternative embodiments, the CPU 10 executes the program at specified time periods other than one hour. For example, the price information database 110 maintains the execution time for the CPU 10 to execute the processing.

The CPU 10 accesses the price information database 110, retrieves a draft No. from the database 110, and stored the draft No. on the memory 12 etc. (hereafter referred to as "memory 12") (step 701 in Fig. 19). The draft number is to identify a target to be generated of an approval status notifying e-mail. The draft number(s) retrieved at step 701 include(s) draft number(s) for drafted price information correlated with the approval status after the last execution time of notifying e-mail sending processing. More specifically, the CPU 10 determines the draft number(s) to be retrieved on the basis of "response time" stored on the price information database 110 shown in Fig. 8. For example, in Fig. 8, if the last execution time is "June, 6, 2004, 14:00", the CPU 10 executes the notifying e-mail sending processing at 15:00 of the same date, and retrieves draft number from "A001" to "A004" for approval status notifying e-mails. If the last execution time is "June, 6, 2004, 15:00", the CPU 10 executes the sending processing at 16:00 of the same date, and retrieves draft number of "A005" for approval status notifying e-mail. That process enables the control server 100 to send updated notifying e-mail once every one hour. For the purpose of illustration, the following steps will be explained assuming that the CPU 10 retrieved the draft number from "A001" to "A004".

The CPU 10 automatically stores the execution date and time at step 352 for the "response time". In the embodiments, when the approval status recorded is "PENDING", the CPU 10 does not store the response time. When the approval status is changed from "PENDING" to "OK" or "NG" by the approver's inputting process, then, the CPU 10 stores the execution date and time of receiving the approval information in "response time" column (refer to step 354 in Fig. 14). When an approval status is "PENDING", the user of drafter's PC 200 recognizes that approval is pending through the above-mentioned price information browse processing. For alternative embodiments, the CPU 10 retrieves draft number(s) corresponding to "PENDING" for the notifying e-mail. In that case, the CPU 10 stores the execution date and time of receiving the approval information of "PENDING" in "response time" column. Furthermore, when the approval status is changed from "PENDING" to "OK" or "NG" by the approver, the CPU 10 updates the response time, and retrieves the draft number(s) corresponding to the updated "OK" or "NG" for notifying e-mail(s).

The CPU 10 accesses the "configuration for e-mail sending" column on the user database 130 (shown in Fig. 9) by using a drafter code (step 703). The "drafter code" is obtained by the CPU 10 since the drafter code is correlated with the draft number. As the illustration here, drafter code of "X012" and "X025" are obtained. The CPU 10 executes the following process for every drafter code correlates with the draft number retrieved.

The CPU 10 determines whether the column information of the "configuration for e-mail sending" is "1" (step 705). As the illustration here, the CPU 10 determines that the column information for drafter cod of "X012" on the user database 130 (shown in Fig. 9) is "1".

The CPU 10 accesses the user database 130, and obtains the organization name ("A") to which the drafter code of "X012" belongs. The CPU 10 accesses the security setting table 150 (shown in Fig. 10) by using the organization obtained, and obtains information of "items to be included in mail" and "items priority" (step 707).

The CPU 10 retrieves contents of the items corresponding to the draft number from the price information database 110 on the basis of the "items to be included in mail" and "items priority" obtained. The CPU 10 generates a mail record based on the contents retrieved, and stored the mail record on the memory 12 (step 709).

More specifically, at step 709, the CPU 10 retrieves the contents of the items from the price information database 110, and generates the mail record by combining the contents with an e-mail template stored on the mail database 170. In the case of e-mail template shown in Fig. 11, the "drafter code" stored on the price information database 110 (shown in Fig. 8) is combined with the template. The CPU 10 automatically assigns numbers for "mail number". Each content data corresponding to the item in the price information database 110 is combined with the "data area" of the template on the basis of the "items to be included in mail" and "items priority" obtained. The CPU 10 generates the mail record by adding certain header information for mail sending at step 709.

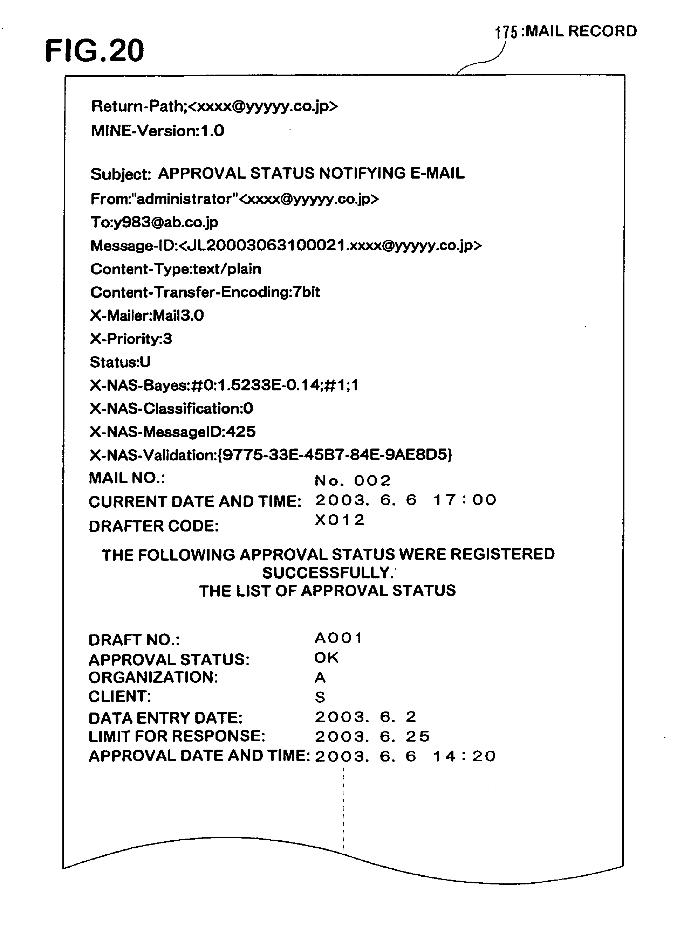

Fig 20 illustrates an example of the e-mail source code generated at step 709. The mail record 175 includes the header information and the content data. The content data are extracted from the price information database 110, are combined with the e-mail template shown in Fig. 11.

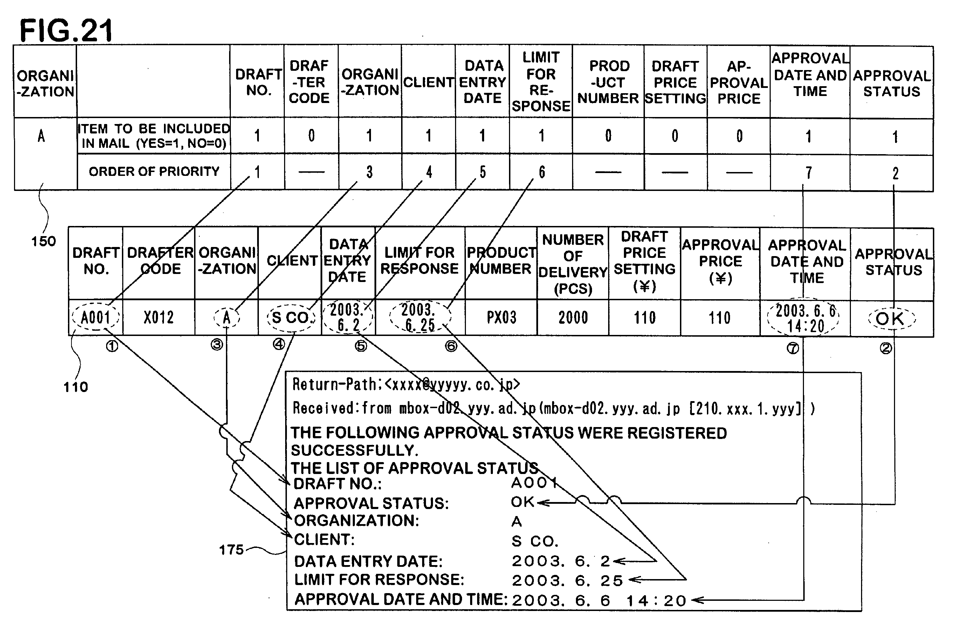

Fig. 21 illustrates a schematic diagram of the process that the CPU 10, at step 709, to retrieve the contents of the items form the price information database 110, and generates the mail record by combining the contents with an e-mail template on the basis of the "items to be included in mail" and "items priority" stored on the security setting table 150 (shown in Fig. 10). As shown in Fig. 21, the CPU 10 combines the content of "draft number", which is as the priority number "1", with the mail record 175, then, combines the content of "approval status", which is as the priority number "2", with the next row of the content of "draft number" combined. The CPU 10 combines the contents continuously on the basis of "items priority", and at last, combines the content of "approval date and time" with the mail record 175.

As the illustration here, the CPU 10 generates one mail record which comprises the draft number of "A001" and "A002" drafted by the drafter code of "X012". More specifically, the CPU 10 generates the mail record corresponding to the contents of "A001" and the contents are arranged in order "draft number", "approval status", "organization", "client", "data entry date", "limit for response", and "approval date and time". Therefore, the mail record comprises "approval status", but does not comprise the "draft price setting" (which corresponds to the term "comprises at least the approval status item but the confidential item"). After combining the contents of "A001", the CPU 10 combines the contents of "A002" with the mail record.

In the embodiments, the "items to be included in mail" and "items priority" vary according to the organization. For alternative embodiments, the "items to be included in mail" and "items priority" are fixed. The mail record can be generated on the basis of the e-mail template stored on the mail database 170. In that case, the CPU 10 does not utilize the security setting table 150 shown in Fig. 10. More specifically, items to be extracted from the price information database 110 (shown in Fig. 11) are pre-recorded on the "data area" of an e-mail template in a certain sequential order. The CPU 10 retrieves the contents of items from the price information database 110 on the basis of the information included in the e-mail template, and combines the contents with the mail record in the sequential order.

The CPU 10 determines whether the mail record on the memory 12 was not greater than 3500 bite (step 711). If the mail record was not greater than 3500 bite, the CPU 10 executes the process of step 717 and the subsequent steps. On the other hand, if the mail record was greater than 3500 bite, the CPU 10 deletes the mail record portion beyond 3500 bite (step 713) (which corresponds to the term "generating the e-mail with excluding an item of more than the specified data volume").

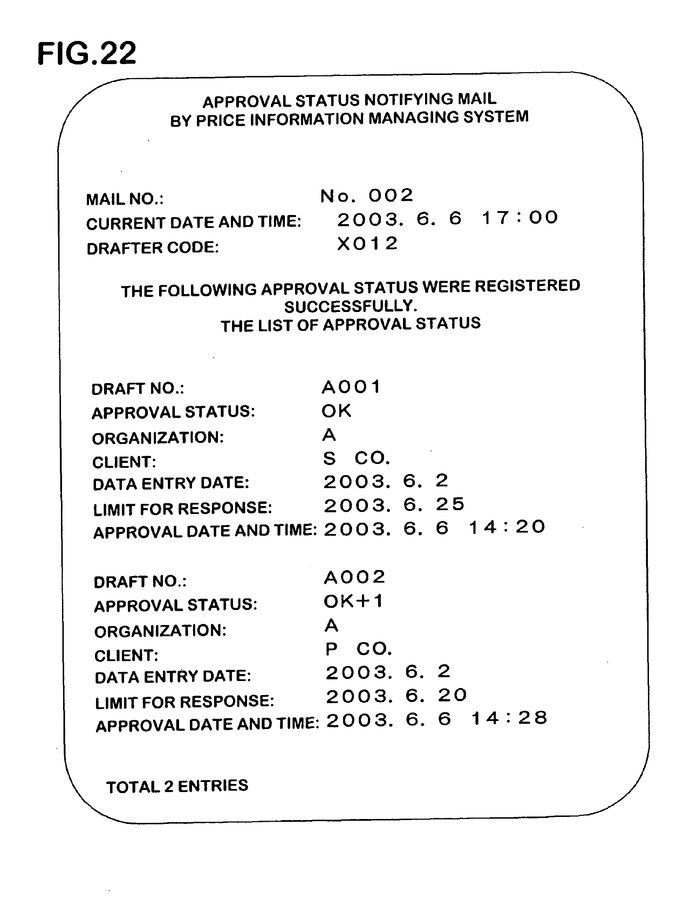

At step 713, for example, the CPU 10 deletes certain data areas of greater than 3500 bite from the mail record. In the example shown in Fig. 22, when data volume of 3500 bite corresponds up to a text between the row of "Response date and time: 2003.6.6 14:28" (draft number of A002), the CPU 10 deletes all of the information for A002, which is from the row of "draft number A002" to the row of "Response date and time: 2003.6.6 14:28". For alternative embodiments, the CPU 10 deletes the row of "Response date and time: 2003.6.6 14:28" only.

The CPU 10 adds a message text for notifying excess volume to the bottom of mail record (step 715) (which corresponds to the term "including a message about the excess volume in the e-mail"). The excess volume notifying message is text information stating that "the data volume is in excess".

After step 711 or step 715, the CPU 10 retrieves the mail address corresponding to the drafter code from the user database 130, and adds the mail address in the header area of the mail record (step 717). As an example, the CPU 10 retrieves "X012@ab.co.jp" that is the mail address for drafter code of "X012", and adds the address in the header area.

The CPU 10 stores the mail record that recorded in the memory 12 on the mail database 170 (step 718). The mail record is correlated with an individual "mail number". Therefore, when mail sending errors occurred, the CPU 10 can retrieve same e-mail based on the "mail number" for re-sending.

The CPU 10 sends the mail record as an approval status notifying e-mail through the Internet 600 (step 719). A well-known technique is applicable for the approval status notifying e-mail sending processing by the CPU 10. In the embodiments, the control server 100 sends the mail records (mail data) in accordance with the simple mail transfer protocol (SMTP). As an example here, an approval status notifying e-mail is sent to the mobile phone 400 owned by the user of "Yamada" corresponding to the drafter code of "X012".

The CPU 10 determines whether other unprocessed draft number is stored on the memory 12 (step 721). As an example here, in the draft number from "A001" to "A004", "A001" and "A002" have been already processed. Therefore, the unprocessed draft numbers are "A003" and "A004". If other unprocessed draft number is stored at step 721, the CPU 10 returns to step 703 and continues the processing. More specifically, the CPU 10 accesses the user database 130 based on the drafter code of "X025" that corresponds to draft number of "A003" and "A004". The CPU 10 determines that the column information for "configuration for notifying e-mail" corresponds to "X025" was "0" (step 705), and then, executes the processing of step 721. As an example here, an approval status notifying e-mail for "X025" is not generated.

When the CPU 10 determines that other unprocessed draft number is not stored, the CPU 10 completes its tasks.

Fig. 22 illustrates an example of an approval status notifying e-mail screen for the LCD 43 of mobile phone 400, which receives the e-mail sent at step 719. The approval status notifying e-mail is sent from the control server 100 based on the mail record 175 illustrated in Fig. 20, and is displayed on the LCD 43 as shown in Fig. 22. Fig. 22 illustrates e-mail contents for the mobile phone 400 for "YAMADA" who corresponds to the drafter code of "X012". As explained in the process of step 709, each content from the price information database 110 is arranged and displayed on the basis of the "items to be included in mail" and "items priority" stored on the security setting table 150.

When the excess volume of mail record occurred, a text stating that "the data volume is in excess" is added to the bottom of the approval status notifying e-mail (refer to step 715 in Fig. 19). In that case, the users of mobile phone 400 can check the details of the price information as well as the information deleted by later using the drafter's PC 200 in the company building.

In the embodiments, the "approval date and time" is utilized to determine the target to be generated of notifying e-mail (refer to step 701 in Fig. 19). For alternative embodiments, flag information can be utilized. More specifically, the price information database 110 maintains a column information for "sending flag" (not shown). In the column, "0" means unapproved drafted price information, and "1" means drafted price information of which the approval status has been recorded or updated. At the time of execution of the approval status notifying e-mail sending, the CPU 10 retrieves draft number(s) of which the "sending flag" is "1", executes the process from step 703, and rewrites the "sending flag" from "1" to "0" for the draft number of which the e-mail sending process has been completed.

In the embodiments, the CPU 10 executes the approval status notifying e-mail sending process once every one hour. For alternative embodiments, the CPU 10 executes the e-mail sending process for certain drafted price information whenever latest approval status is recorded on the price information database 110. For other embodiments, the CPU 10 executes the e-mail sending process during certain time periods (e.g. nighttime hours). In that case, the time periods should be preferably configured in consideration of the congestion of communication traffic in order to lighten burden on the performance of the control server 100.

### 8. Advantages of the embodiments

As above-mentioned, the embodiments include several features. Examples of advantages of each feature will be explained.

In the embodiments, the control server 100 permits the drafter's PC 200 or approver's PC 300 to browse the information stored on the price information database 110 since the communication lines between the control server 100 and the PC do not include the public network. On the other hand, the control server 100 sends the e-mail, which is based on the information from the price information database 110 but excluding the price information (i.e. the draft price setting) , to the mobile phone 400 since the communication line between the control server 100 and the mobile phone 400 includes the public network. Therefore, the price information managing system improves information accessibility with detailed information for the user device within the closed network where there is a rare possibility of losing information secrecy (e.g. information intercepted or decrypted through the Internet). Furthermore, the system maintains confidentiality of the information by disclosing contents, in which confidential information is excluded, for the user device within the public network where there is a possibility of losing information secrecy.

While the control server 100 dose not notify the content of "draft price setting" as highly confidential information to the mobile phone 400, the control server 100 notifies the content of "approval status" for the price to the mobile phone 400. The users who draft the "draft price setting" are aware of the price, or at least can easily remember the price. In this regard, the features of relationship between the "draft price setting" and "approval status" will be illustrated as follows.
(1) The "draft price setting", which is not included in the approval status notifying e-mail, is originally inputted to the system by the users who will be receiving the e-mail (which includes the "approval status" instead).
(2) The "draft price setting" (which corresponds to the term "proposal information including a confidential item") and the "approval status" (which corresponds to the term "approval status item in response to the proposal information") are not independent information each other. In other words, the "draft price setting" and the "approval status" are paired information each other, and have strong information relevancy (or information link). For example, the possibility of gaining the approval is dependent on the draft price setting. More specifically, when a draft price setting (which is a price for delivering products to a customer) is relatively low, it is difficult to gain an approval in response to the price.

Therefore, in spite of not displaying the draft price setting on the LCD 43, the users of mobile phone 400 can obtain useful information for understanding the contents of draft price setting with the display of "approval status" etc.. Accordingly, it is equally saying that the users obtain all the necessary information with respect to the draft price.

For example, when the users of the mobile phone 400 receives the approval status notifying e-mail outside their company buildings during their business activities, they can quickly expedite their decision-making such as conducting negotiation with clients without going back to the buildings and browsing the screen of the approval status details (shown in Fig. 18B). Therefore, the times for their business deals can be shortened since they do not have to take time to browse the approval status screen using the drafter's PC 200 in the buildings.

In the case in which more than two draft price setting were drafted by one user, the user can discriminate one draft from another based on the "draft number" included in the mail.

The control server 100 determines the item to be included and the priority order of the items alignment in the approval status notifying e-mail by utilizing the security setting table 150 shown in Fig. 10. The users of mobile phone 400 can check the information in the priority order through the approval status notifying e-mail. Furthermore, the priority order can be optimized to fit each organization's business needs by modifying the contents of the security setting table 150.

In the embodiments, in the case in which the approval status inputted is the "conditional approval", the statement of "OK +1" etc. as the approval status in the notifying e-mail is displayed on the screen. The "+1" indicates a price difference between a draft price and an approver's approval price. Since the user who draft the "draft price setting" is likely to aware of the price, the user can easily understand the approver's indicating price behind such "conditional approval" indication. For example, when a conditional approval in response to a draft price of "1000 YEN (Japanese yen)" was "OK-5" (or OK minus 5), the drafter can understand that the manager approved "995 YEN" as the price for products delivery.

In the embodiments, the control server 100 executes the approval status notifying e-mail sending processing (refer to Fig. 19) at specified time periods (e.g. once every one hour). The users of mobile phone 400 can receives updated e-mails at specified time periods.

In the embodiments, the control server 100 does not include a mail record portion beyond 3500 bite in an approval status notifying e-mail (refer to step 713 in Fig. 19). Therefore, the users of mobile phone 400 can receive an approval status notifying e-mail within a short time. The data volume limit of 3500 bite is explained as an example of a specified data volume. Therefore, other data volume limit can be applied in consideration of communication traffic for the mobile phone's email transmission and reception, maximum message count limit for the mobile phone's e-mail, and/or the like. Furthermore, when excess volume occurred in a mail record, a message text stating that "the data volume is in excess" is added to the bottom of approval status notifying e-mail (refer to step 715 in Fig. 19). In that case, the users the mobile phone 400 can check the details of the price information as well as the information deleted by later using the drafter's PC 200 to perform the price information browse processing.

### 9. Second embodiments

In the above-mentioned embodiments, content of items for a draft price setting and approval price are not included in an approval status notifying e-mail by utilizing the price information database 110 that stores the content correlating with specific item name. With that configuration of the price information database 110, confidential contents such as the draft price setting and approval price can be excluded quickly and reliably from data to be used for the notifying e-mail.

In the above-mentioned embodiments, the notifying e-mail is generated with a standard format by selecting necessary items from the price information database 110. In a certain case, the standard e-mail may not always be sufficient information for the drafters and approvers to increase their communications each other.

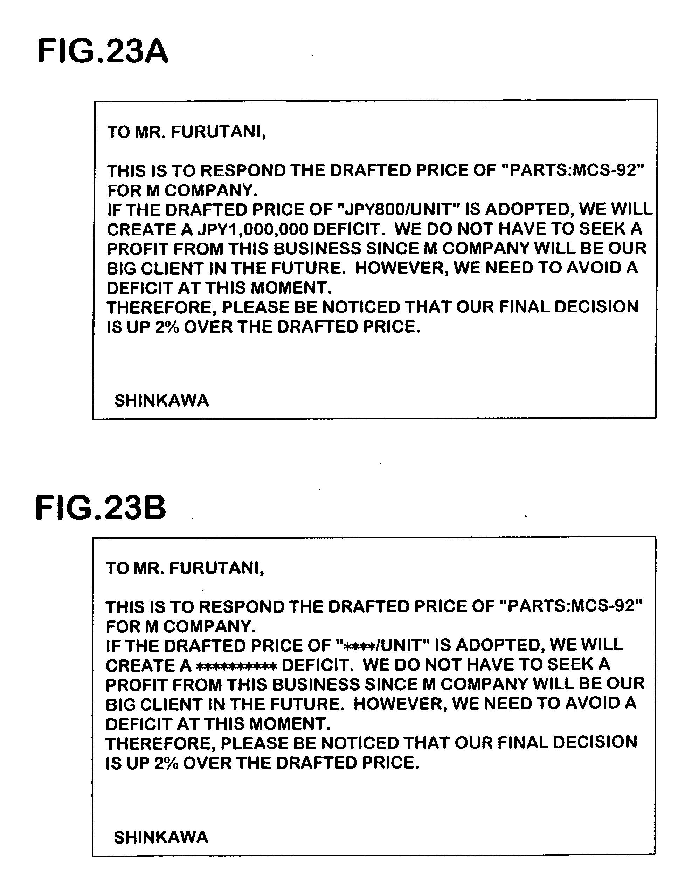

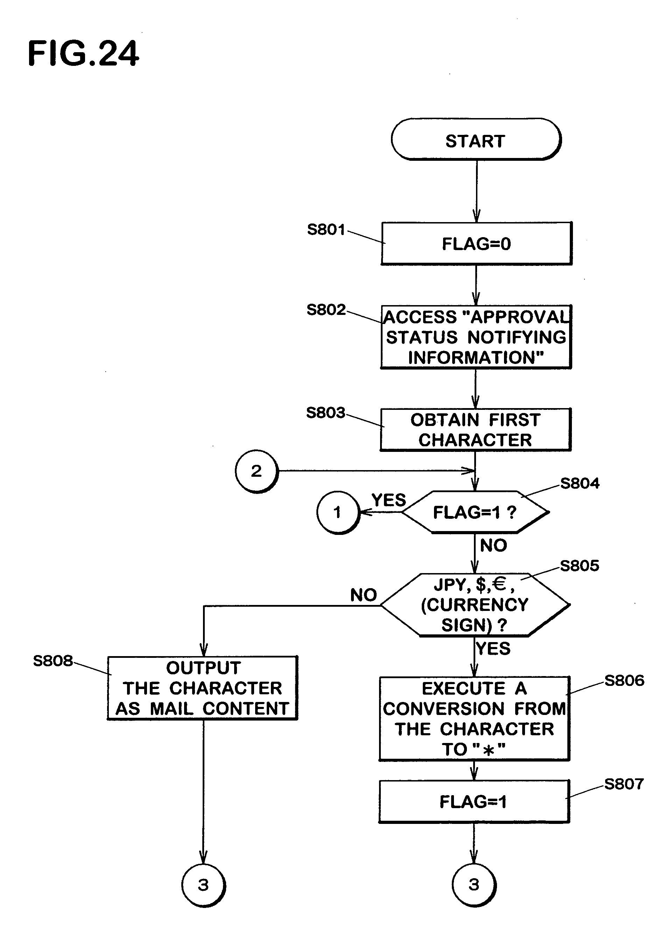

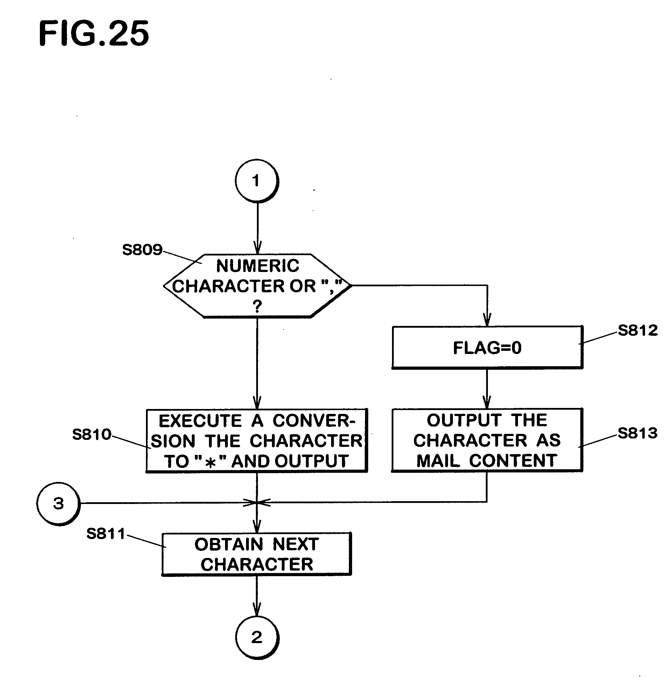

In order to improve the communications, the approvers input the contents of approval status as illustrated in Fig. 23A. The approver's PC 300 sends the approval status to the control server 100, and the control server 100 stores the approval status on the recording means 58. The outputting means 57 (shown in Fig. 3) of the control server 100 sends the approval status as a notifying information data to the drafter's PC 200. The e-mail generating mean 53 generates an approval status notifying e-mail in which confidential information is excluded in accordance with a program flowchart illustrated in Fig. 24 and Fig. 25.

The CPU 10 sets a determination flag to 0 (step 801). The CPU 10 accesses an approval status notifying information in the recording means 58 (step 802). The CPU 10 obtains the first character from the notifying information (step 803). For example in Fig. 23A, the CPU 10 obtains the first character of "T".

The CPU 10 determines whether the flag is 1 or not (step 804). Here, as the example, the CPU 10 determines that the flag is 0, and executes the process from step 805. At step 805, the CPU 10 determines whether a character obtained is a currency sign such as "JPY or ¥ (which are the currency sign of Japanese Yen)", "$ (which is the currency sign of U.S. dollars)", or euro-mark. If the character obtained was not the currency sign, the CPU 10 outputs the character as an e-mail content into an e-mail file record (step 808). The CPU 10 obtains a next character (e.g. "O" shown in Fig. 23A) at step 811 in Fig. 25, and returns to step 804.

When the CPU 10 determines that the character obtained was "JPY or ¥ (e.g. the 4th line in Fig. 23A) at step 805, the CPU 10 executes the processing of step 806. The CPU 10 executes a conversion from the character obtained to "* (which is a specified mark to disguise the content of character)", and outputs the specified mark into the e-mail file record. The CPU 10 sets the flag to 1 (step 807). As above-mentioned, the CPU 10 sets the flag to "1" when detecting the currency sign.

The CPU 10, then, obtains a next character (e.g. "8" in Fig. 23A) through the approval status notifying information. The CPU 10 returns to step 804 again, and continues the processing. Here, as the example, the CPU 10 determines that the flag is "1", and executes the processing of step 809. The CPU 10 obtains the character of "8", and executes the processing of step 810. At step 810, the CPU 10 executes a conversion from the character of "8" to the specified mark of "*", and outputs the mark into the e-mail file record.

The CPU 10 obtains next character (step 811), and returns to step 804. Accordingly, the continued numbers form the currency sign are converted to the specified mark of "*".

After finishing the conversion of the last number at step 809, in which the CPU 10 determines whether the character obtained is a numeric character or "," (comma or any other marks putted into between numeric characters)", the CPU 10 executes the processing of step 812, and sets the flag to "0". The CPU 10 outputs the character obtained as a mail content into the e-mail file record. The CPU 10 obtains the next character (e.g. "0") through the approval status notifying information, and returns to step 804 again.

As above-mentioned, the CPU 10 generates the e-mail in which the confidential information is converted to the specified mark of "*" (refer to Fig. 23B). In that processing, the CPU 10 utilizes the currency sign as a flag to identify the start point of the confidential information, and utilizes the last numeric character of the continued numbers as a flag to identify the end point of the confidential information.

In second embodiment, the approvers can input an approval status on a free text basis. Furthermore, the system can prevent leakage of the confidential information. The drafters can understand the e-mail includes some confidential information with the specified mark of "*".

In second embodiment, characters from a "currency sign" to a "last numeric character" of continued number(s) are dealt with confidential data. For alternative embodiments, characters from a "first numeric character" to a "currency sign" are dealt with confidential data. That determination processing is preferable for Japanese-style price indication method such as "20,000 ¥ (or YEN, or JPY , etc.)" where the currency sign is positioned after the numeric character.

### 10. Third embodiments

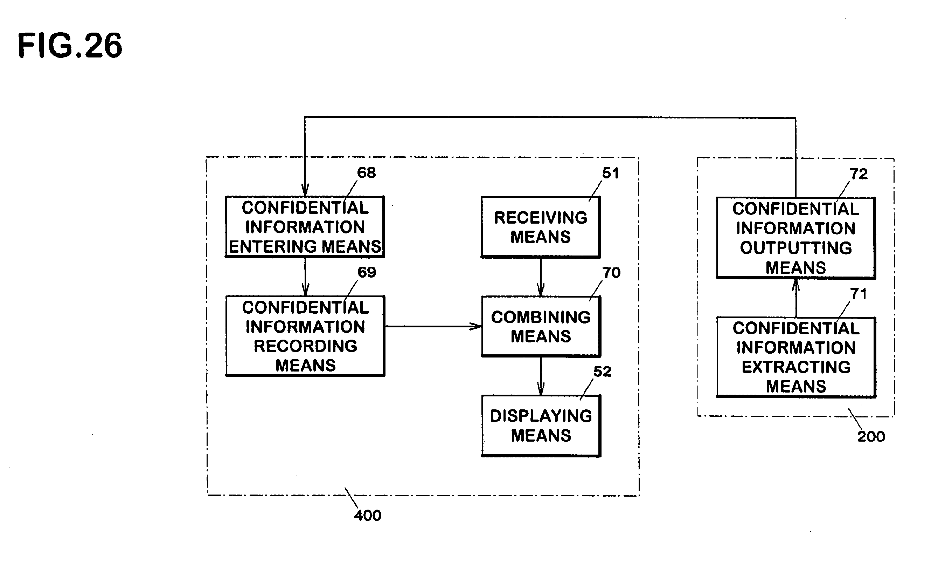

Fig. 26 shows a function block diagram of other embodiment of a price information managing system. The system includes similar structures as shown in Fig. 3, therefore, such structures is not shown in the diagram. In the third embodiment, the functions of the drafter's mobile phone 400 and drafter's PC are modified from those of the devices shown in Fig. 3.

In third embodiment, when users of the drafter's PC 200 input the drafted price information data, the data is transferred from the drafter's PC 200 to the drafter's mobile phone 400. That data transfer can be executed through the Universal Serial Bus (USB) terminal, infrared data communication, or the like.

As shown in Fig. 26, the confidential information extracting means 71 of drafter's PC 200 extracts confidential information, and a draft ID from the drafted price information inputted by the drafter. The confidential information outputting means 72 outputs the confidential information and the draft ID to the confidential information entering means 68 of mobile phone 400. The confidential information recording means 69 records the confidential information by correlating with the draft ID.

As above-mentioned, the confidential information is recorded in the mobile phone 400 without leaking the confidential information.

When the mobile phone 400 within a public network receives an approval status notifying e-mail from the control server 100, the following steps will be performed. The receiving means 51 receives the approval status notifying e-mail. The combining means 70 accesses the draft ID included in the e-mail received, and readouts the confidential information recorded in the recording means 69 on the basis of the draft ID. The combining means 70, then, combines the confidential information with the approval status notifying e-mail received. The displaying means 52 displays the contents of e-mail with the confidential information.

The system makes it possible to prevent the confidential information leaking, and enables the users to check the confidential information even within the public network environment.

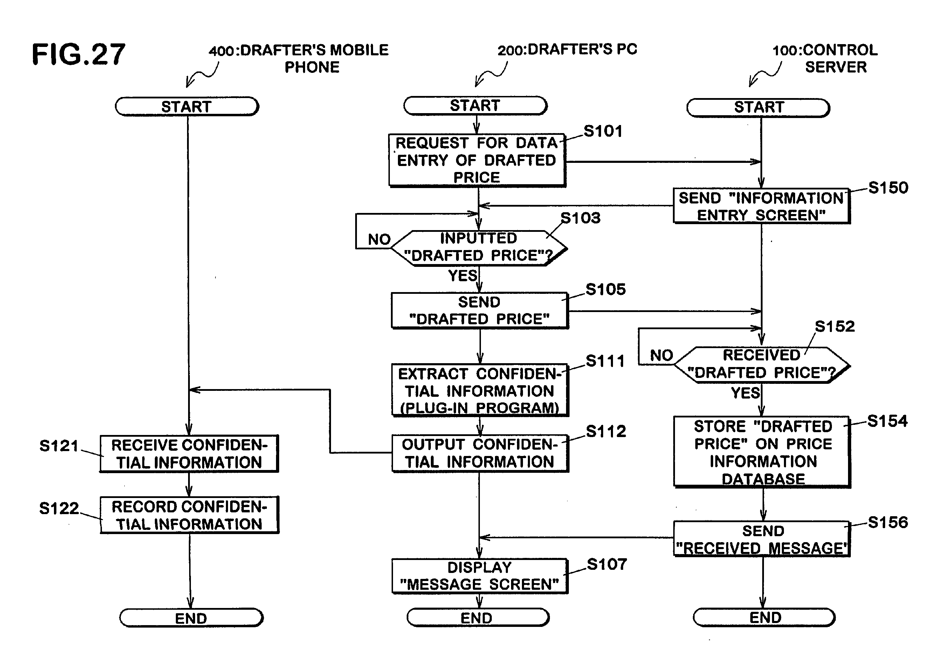

Fig. 27 shows an example of program flowcharts for the drafter's mobile phone 400, drafter's PC 200, and control server 100 at a drafted price inputting processing. In the explanations below, same steps as shown in Fig. 12 are omitted for the sake of simplicity.

In embodiments except third embodiment, the users of drafter's PC 200 browses the contents stored on the control server 100 with a browser program, and sends the necessary data to the control server 100. In the third embodiment, in addition to the browser program, the drafter' PC 200 is provided with a plug-in program which adds certain functions to the browser program.

When the drafter's PC 200 sends drafted price information to the control server 100 (step 105), the plug-in program execution is started. The CPU 20 retrieves confidential information (i.e. the draft price setting) from the drafted price information in accordance with the plug-in program (step 111). The CPU 20 outputs the draft price setting and draft number to the drafter's mobile phone 400 which connects to the drafter's PC 200 (step 112). In third embodiment, the CPU 20 automatically assigns the draft number at step 105, and stores the draft number on the price information database 110. For alternative embodiments, the CPU 20 executes the processing from step 111 after step 107. In that case, the CPU 20 receives a draft number assigned by the control server 100, and outputs the draft number etc. to the drafter's mobile phone 400.

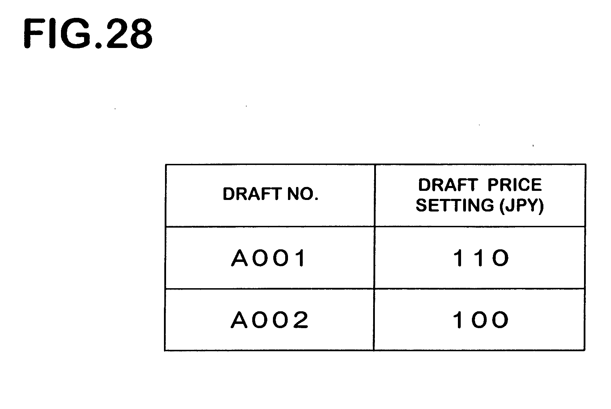

The drafter's mobile phone 400 stores a confidential information recording program. The CPU 40 receives the draft price setting and draft number in accordance with the confidential information recording program (step 121), and stored them on the memory 44 (or nonvolatile storage) by correlating each other (step 122). Fig. 28 illustrates the draft number and draft price setting stored on a table.

In this embodiment, the drafter's mobile phone 400 stores the confidential information recording program. However, in the case in which the drafter's PC 200 can connect (or directly write certain data) to the memory 44 of mobile phone 400, the mobile phone 400 does not need to store the recording program.

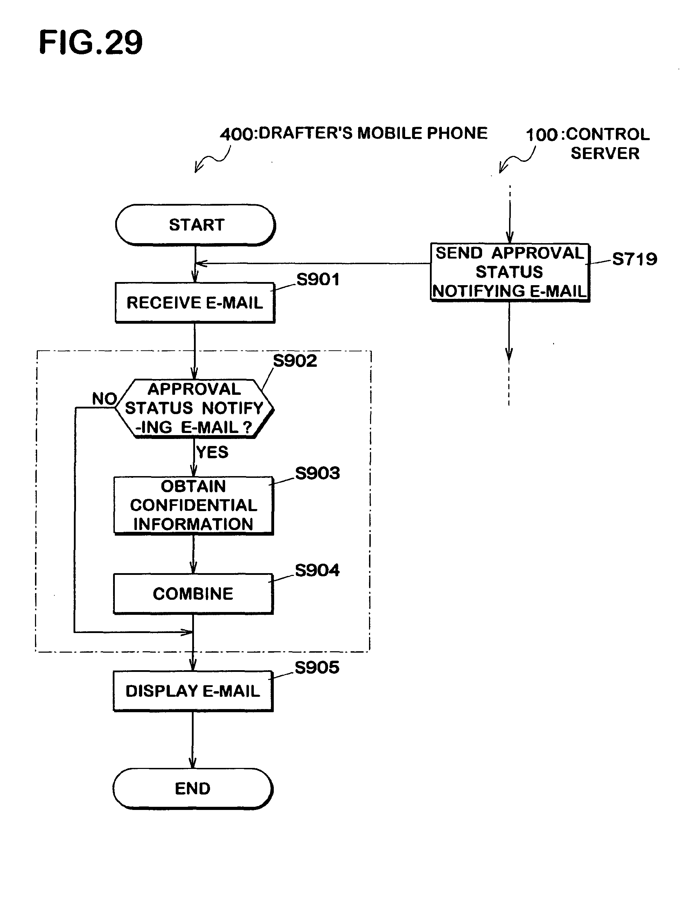

The confidential information stored on the mobile phone 400 is utilized for after-mentioned executions at the time of receiving an approval status notifying e-mail. Fig. 29 illustrates a mail program flowchart and a confidential information handling program flowchart for the drafter's mobile phone 400 to browse the approval status notifying e-mail. The mail program is a common program for mail receiving/displaying. The steps 901 and 905 in Fig. 29 illustrate processing of the mail program.

The confidential information handling program is a program for assisting the functions of the mail program (e.g. plug-in program), and is to execute the processing of step 902, 903, and 904.

The CPU 40 receives a e-mail (step 901), and determines whether the e-mail is an approval status notifying e-mail or not (step 902). The determination can be executed by verifying whether a mail sender address is related to the control server 100 or not since the approval status notifying e-mail is sent from the control server 100. For alternative embodiments, the determination can be executed on the basis of mail title. In that case, a specified title for the e-mail should be pre-assigned in the system.

If the e-mail received is not an approval status notifying e-mail, the CPU 40 displays the content of e-mail (step 905) without executing the processing of step 903. On the other hand, if the e-mail received is an approval status notifying e-mail, the CPU 40 extracts the draft number from the e-mail, and obtains the draft price setting stored on the memory 44 on the basis of the draft number extracted (step 903).

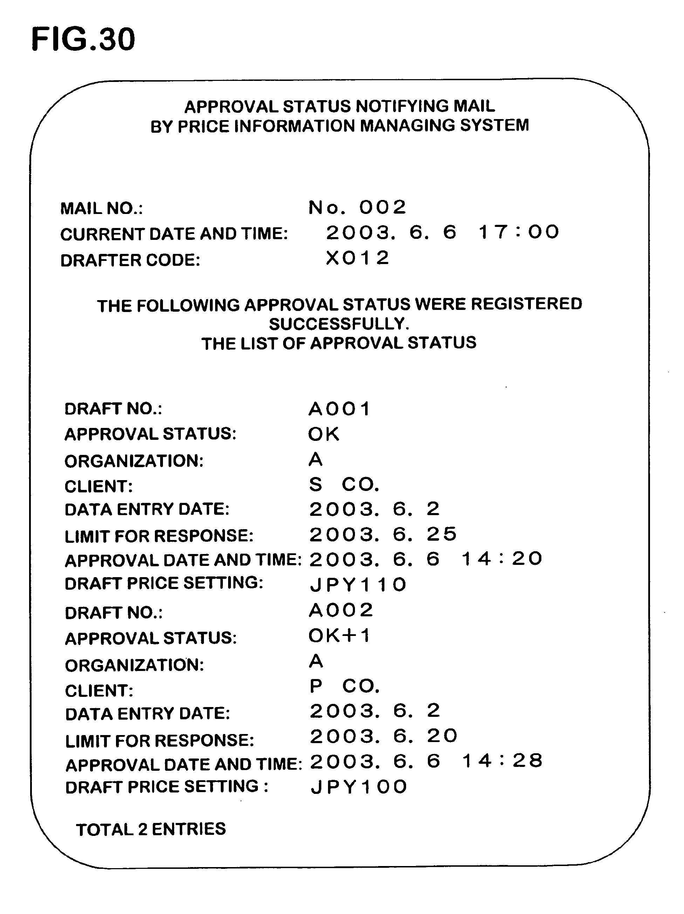

The CPU 40 combines the draft price setting with the contents of approval status notifying e-mail (step 904). The CPU 40 displays the contents of the e-mal combined on the LCD 43 as shown in Fig. 30 (step 905). The drafter can check the approval status as well as the draft price setting.

In the third embodiment, at the time of inputting the drafted price information, both the draft number and draft price setting are transferred from the drafter's PC 200 and mobile phone 400 by utilizing the USB terminal etc. For alternative embodiments, the drafter's PC 200 and/or control server 200 sends an e-mail, which includes the draft number and draft price setting, to the mobile phone 400. In that case, since the e-mail is sent through a public network, there is a possibility of losing information secrecy. However, even if the e-mail contents are leaked to the public network, serious problem does not seem to happen since the contents, which are the draft number and draft price setting, are incomplete information. In other words, the draft number and draft price setting are meaningless information unless they are recognized together with the contents of approval status notifying e-mail. Therefore, as above-mentioned, the e-mail sending of the draft number and draft price setting is a practical embodiment.

In the third embodiment, a draft price setting stored on the drafter's mobile phone 400 is combined with an approval status notifying e-mail. For alternative embodiments, as shown in Fig. 31, the control server 100 generates an approval status notifying e-mail by including a price difference between a draft price setting and a approval price. Then, the control server 100 sends the e-mail to the mobile phone 400. In the mobile phone 400, a confidential information handling program calculates the approval price based on the draft price and the price difference. Then, the approval price is displayed on the LCD 43.

Fig. 31 illustrates an overview of the above-mentioned processing. The drafter PC 200 sends a drafted price information to the control server 100. At that time, a draft number and draft price setting, which are included in the drafted price information, are stored on the drafter's mobile phone 400 (Fig. 31A).

The approver's PC 300 sends a price difference between the draft price setting and an approver's approval price to the control server 100, and the control server 100 stores the price difference (Fig. 31B). The control server 100 sends an approval status notifying e-mail to the mobile phone 400. The mobile phone 400 obtains the pre-stored draft price setting on the basis of the draft number included in the e-mail, and adds the price difference to the draft price (or subtracts the price difference from the draft price) in order to obtain a approval price.

Fig. 32 illustrates an example of approval status notifying e-mail displayed on the mobile phone 400. In the example shown in Fig. 32, the draft price setting for the draft number of "A001" is "110 JPY", and an approver inputs a price difference of "+ 5 JPY (or plus 5 JPY) in response to "A001". In addition, the draft price setting for the draft number of "A002" is "100 JPY", and the approver inputs a price difference of "0 JPY" in response to "A002".

Accordingly, the system makes it possible to prevent the confidential information leaking, and enables the users to check the confidential information even within the public network environment.

### 11. Fourth embodiments

Fig. 33 shows a function block diagram of other embodiment of the price information managing system. The system includes similar structures as shown in Fig. 3, therefore, such structures is not shown in the diagram.

In fourth embodiment, when the users of drafter's PC 200 input the draft price data, the data is transferred from the drafter's PC 200 to the drafter's mobile phone 400. As is the case with the third embodiment, that data transfer can be executed through the Universal Serial Bus (USB) terminal, infrared data communication, e-mail sending, or the like.

The key information generating means 77 of drafter's PC 200 generates an encryption key. Each time of sending drafted price information, a different encryption key is generated. The key information outputting means 76 sends the key (and the draft number) to the control server 100, and outputs the key (and the draft number) to the drafter's mobile phone 400.

The control server 100 receives the key, and stores the key on the price information database 110 by correlating with the draft number. On the other hand, the key information entering means 74 of mobile phone 400 receives the key and draft number, and stores them on the key information recording means 75.

When the control server 100 receives an approval status from the approver's PC 300, the control server 100 generates an approval status notifying e-mail. In the fourth embodiment, the approval status notifying e-mail includes confidential information such as the draft price setting and a approval price from the approver. However, in order to prevent leakage of the confidential information, the confidential information is encrypted. More specifically, the e-mail generating means 53 (shown in Fig. 3) encrypts the approval status notifying e-mail with the key stored on the price information database 110.

When the mobile phone 400 within the public network receives the approval status notifying e-mail from the control server 100, the mobile phone 400 executes the following steps. The receiving means 51 receives the approval status notifying e-mail. The decrypting means 73 obtains the key from the recording means 75 based on the draft number (or draft ID) included in the mail. The decrypting means 73 decrypts the approval status notifying e-mail with the key obtained.

The displaying means 52 displays the contents of the approval status notifying e-mail including the confidential information.

Accordingly, the system makes it possible to prevent the confidential information leaking, and enables the users to check the confidential information even within the public network environment.

Fig. 34 shows an example of program flowcharts for the mobile phone 400, drafter's PC 200, and control server 100 at a drafting price inputting processing. In the explanations below, same steps as shown in Fig. 12 are omitted for the sake of simplicity.

When the users of drafter's PC 200 clicks on the "send" button shown in Fig. 13 (or "entry finished" button (not shown)), a plug-in program execution is started. The CPU 20 generates the encryption key in accordance with the plug-in program (step 125). Each time of execution, a different encryption key is generated by using a random number.

The CPU 20 of drafter's PC 200 sends the drafted price information and the encryption key to the control server 100 (step 127). The control server 100 receives the drafted price information and the encryption key, and stores them on the price information database 110 (step 170).

At the same step, the CPU 20 outputs the draft number and encryption key included in the drafted price information to the mobile phone 400. The CPU 40 of mobile phone 400 receives the draft number and encryption key (step 130). The CPU 40 records the draft number and encryption key on the memory 44 (or nonvolatile storage) by correlating with each other (step 132).

Fig. 35 shows an example of program flowcharts for the mobile phone 400 and control server 100 at an approval status notifying e-mail sending/browsing processing. The CPU 10 of control server 100 retrieves the drafted price information that has already correlated with the approval status from the price information database 110 (step 1701). The CPU 10 accesses the "configuration for e-mail sending" column on the user database 130 (shown in Fig. 9) by using a drafter code included in the drafted price information retrieved, and obtains a flag that indicates whether the user (or the drafter) requests an e-mail notification or not (step 1703). If the user does not request the e-mail notification, the CPU 10 retrieves other drafted price information (step 1705 and step 1721).

If the user requests the e-mail notification, the CPU 10 generates a mail record based on the drafted price information retrieved (step 1731). In the fourth embodiment, the mail record is generated by including confidential information such as the draft price setting and a approval price from the approver. The CPU 10 encrypts the mail record with the encryption key correlated with the drafted price information (step 1733). At step 1733, however, the CPU 10 does not encrypts the draft number in the mail record. The CPU 10 stores the mail record on the mail database 170 (step 1718). The CPU 10 sends the mail record encrypted as an approval status notifying e-mail to the drafter's mobile phone 400 (step 1719).

The CPU 40 of mobile phone 400 receives the e-mail (step 1801). The CPU 40 determines whether the e-mail is encrypted or not (step 1811). If the e-mail is not encrypted, the CPU 40 displays the contents of e-mail (step 1805) without executing the processing of step 1813 and step 1814.

If the e-mail is encrypted, the CPU 40 obtains the encryption key recorded on the memory 44 (step 1813). At step 1813, the CPU 40 extracts the un-encrypted draft number form the e-mail, and obtains the encryption key correlated with the draft number on the memory 44.

The CPU 40 decrypts the e-mail by utilizing the encryption key obtained (step 1814). The CPU 40 displays the e-mail decrypted on the LCD 43 (step 1805).

In the fourth embodiment, the users of mobile phone 400 can check the contents of approval status notifying e-mail including the confidential information even within the public network environment since the confidential information is included in the e-mail. Furthermore, there is a rare possibility of losing information secrecy since the e-mail is encrypted with the key. In addition, a different encryption key is generated at each time of execution and is recorded on the mobile phone 400. Therefore, even if the key is leaked, there is a rare possibility of an unauthorized decryption of the e-mail.

In the fourth embodiment, the draft number is not encrypted and sent to the mobile phone 400. Therefore, the mobile phone 400 can obtains the encryption key based on the draft number, and decrypts the e-mail by utilizing the key.

In the fourth embodiment, the encryption key is generated in the drafter's PC 200. For alternative embodiments, the control server 100 generates the key and sends the key to the drafter's PC 200. In that case, the drafter's PC 200 records the key on the mobile phone 400.

### 12. Other embodiments

### 12-1. approval status notifying e-mail contents variations

In the embodiments, the "draft price setting" (the price for delivery) drafted by sales representatives (drafters) and the "approval status" in response to the price are illustrated as the term "notifying information" in the present invention. As examples of the term "notifying information", other information which generally should be kept confidential such as the delivery pieces, the product specification, the budget, or the account settlement are applicable in the present invention.

Information that should be stored on the price information database 110 are not limited to those illustrated in Fig. 8. For alternative embodiments, other information can be added in the database 110. More specifically, the database 100 stores an item for "comments" inputted by the drafter and/or approver (not shown). The comments information makes the contents of the approval to be detailed. For example, assuming that the approver inputs the comment of "the price of 100 JPY can be approved for delivery pieces of 200" in response to drafted price information of "drafted price: 100 JPY, delivery pieces: 200". In that case, the users of drafter's PC 200 can check the comment by the above-mentioned price information browse processing. On the other hand, the control server 100 includes a message stating "comments inputted" instead of the comment information itself in an approval status notifying e-mail. In the case in which the user of drafter's PC 200 are outside of the company building, the user can receive the e-mail through the mobile phone 400 and understand that the approver offered an alternative proposal in response to the drafted price.

For alternative embodiments, the system executes the character conversion processing explained in the second embodiment (or its modified processing) for the above-mentioned comment information, and generates an approval status notifying e-mail by including the comment converted. More specifically, the CPU 10 executes a conversion from all the numeric character (i.e. 0 to 9, or zero to nine) to a specified mark (e.g. "*") in the comments. For comment information (e.g. reasons for approving prices) stating "... will return to profitability with 1 year", or "... increase sales three-fold in two years", the CPU 10 executes a conversion from the comment to "... will return to profitability with * year" or "... increase sales *-fold in * years", respectively. Then, the CPU 10 generates an approval status notifying e-mail by including the comment converted. The drafter can understand the reason for approval status (or rough reason) by browsing the contents of e-mail.

### 12-2. device configuration variations

In the embodiments, the mobile phone 400 is illustrated as the "terminal device within the public network". For alternative embodiments, a personal handy-phone system (PHS) (or a microcellular phone), a personal digital assistant (PDA), personal computer, etc (not shown) can be used as the terminal device.

### 12-3. Program executions

In the embodiments, computer programs for the CPU 10, CPU 20, CPU 30, and CPU 40 are stored on the hard disk 14, hard disk 24, hard disk 34, and memory 44, respectively. Those computer programs can be installed from installation CD-ROMs (not shown). For alternative embodiments, the programs can be installed by a computer-readable storage media such as a DVD-ROM, a flexible disk (FD), or IC card (not shown). Alternatively, the programs can be downloaded to the devices via the communications lines. The programs are installed on the devices from the CD-ROMs, and the devices execute the programs installed. For alternative embodiments, the devices can directly execute programs stored on the CD-ROMs.

Computer-executable programs used in the embodiments include a program to be executable just after installation, a source program, a program needed to be converted to another format (e.g. compressed program, encrypted program), and a program to be executable with a module.

In the embodiments, each function shown in Fig. 3, 26, and 33 is executed by the CPU and the computer program. For alternative embodiments, a part of the functions or all of the functions can be accomplished with a hardware logic (logic circuit) (not shown).

A general description of the present invention as well as preferred embodiments of the invention has been set forth above. It is to be expressly understood, however, the terms described above are for purpose of illustration only and are not intended as definitions of the limits of the invention. Those skilled in the art to which the present invention pertains will recognize and be able to practice other variations in the system, device, and methods described which fall within the teachings of this invention. Accordingly, all such modifications are deemed to be within the scope of the invention.

## Claims

1. A networked computer system comprising:
(a) a secure network inside an institution which is accessible to authorized individuals, said secure network comprising a server for storing a database comprising proposal information proposed by a first authorized individual and needs to be approved by a second authorized individual, said proposal information comprising information which need to be kept confidential;
(b) a connection to a user terminal outside said secure network through a less secure communications link,
said networked computer system further comprising:
(c) at least one first computer operated by said first individual for drafting said proposal and storing it as proposal information in said database on said server through said secure network;
(d) at least one second computer operated by said second individual for accessing said proposal on said server and for adding approval status information indicating an approval status with respect to said proposal and storing it as approval status information in said database on said server through said secure network; wherein said proposal information and/or said approval status information, comprise at least one information which should be kept confidential;
(e) extracting means adapted to extract information from said proposal information and said approval status information stored in said database, said extracted information to be transmitted to a user through said less secure communications link, said extraction being performed such that at least one information identifying a certain proposal and at least one information indicating an approval status are extracted, whereas one or more information which should be kept confidential is not extracted from said database;
(f) message generation means adapted to generate a message to be transmitted to a user through said less secure communications link based on said extracted information;
(g) transmitting means adapted to transmit said generated message to said user terminal through said less secure communications link;
(h) reception means adapted to receive said transmitted message by said user terminal; and
(i) display means for displaying said at least one information identifying said proposal and said at least one information indicating said approval status.

2. The system of claim 1, wherein said less secure communications link comprises one or more of the following:
an email connection;
a short-message-services (SMS) connection;
a WAP connection;
a GPRS connection;
an i-mode connection.

3. The system of claim 1, wherein the information which should be kept confidential comprises price information and wherein said at least one information indicating an approval status comprises approval status information for said price.

4. The system of claims 3, further comprising:
(j) means adapted to automatically calculate a price difference between a draft price of said proposal drafted by said first individual and an approved price approved by said second individual;
(k) means adapted to include said price difference when generating said message to be transmitted to said user.

5. The system of claim 1, wherein said extracting means is adapted to execute said extraction processing at specified time periods.

6. The system of claim 1, wherein (f) the message generation means further comprises:
(l) determination means adapted to determine whether the message generated based on said extracted data exceeds a specified data volume, and wherein in cases where it is determined that said specified data volume is exceeded, (f) said message generation means is adapted to generate said message based on less information such that the specified data volume is not exceeded.

7. The system of claim 6, wherein said database for each information stored therein furthermore stores corresponding priority information, and wherein in cases where it is determined that said specified data volume is exceeded, said less information based on which said message is generated are selected based on said priority information.

8. The system of claim 1, further comprising:
(m) conversion means adapted to convert the data format of said at least on information which should be kept confidential according to a predefined format conversion scheme in order to disguise the content of said at least on information; and
(n) means adapted to include said converted confidential information into said message to be transmitted to said user.

9. An approval status notifying system, comprising:
an approval status notifying device and a terminal device being interconnected to the approval status notifying device;
(a) the approval status notifying device comprises:
(i) means for accessing a notifying information data, which is accessible to the terminal device within a closed network, wherein the notifying information data comprises proposal information including a confidential item and approval information including an approval status item in response to the proposal information;
(ii) means for retrieving a public network use notifying data, wherein the public network use notifying data is retrieved from the notifying information data and comprises at least the approval status item but the confidential item;
(iii) means for generating an e-mail based on the notifying data retrieved; and
(iv) means for sending the e-mail to the terminal device within the public network;
(b) the terminal device comprises:
(i) means for receiving the e-mail; and
(ii) means for displaying the public network use notifying data based on the e-mail received.

10. An approval status notifying system, comprising:
an approval status notifying device and a terminal device being interconnected to the approval status notifying device;
(a) the approval status notifying device comprises:
(i) means for inputting proposal information including a confidential item and approval information including an approval status item in response to the proposal information;
(ii) means for storing a notifying information data, which comprises the proposal information and the approval information, on a recording means;
(iii) means for outputting the notifying information data to the terminal device upon receiving a browsing request for the notifying information data from the terminal device within a closed network;
(iv) means for retrieving a public network use notifying data, wherein the public network use notifying data is retrieved from the recoding means and comprises at least the approval status item but the confidential item;
(v) means for generating an e-mail based on the notifying data retrieved; and
(vi) means for sending the e-mail to the terminal device within the public network;
(b) the terminal device comprises:
(i) means for receiving the e-mail; and
(ii) means for displaying the public network use notifying data based on the e-mail received.

11. An approval status notifying device being interconnected to a terminal device;
(a) the approval status notifying device comprises:
(i) means for accessing a notifying information data, which is accessible to the terminal device within a closed network, wherein the notifying information data comprises proposal information including a confidential item and approval information including an approval status item in response to the proposal information;
(ii) means for retrieving a public network use notifying data, wherein the public network use notifying data is retrieved from the notifying information data and comprises at least the approval status item but the confidential item;
(iii) means for generating an e-mail based on the notifying data retrieved; and
(iv) means for sending the e-mail to the terminal device within the public network.

12. A computer program for an approval status notifying device being interconnected to a terminal device;
the program is implemented in a computer and capable of causing the computer perform:
(i) means for accessing a notifying information data, which is accessible to the terminal device within a closed network, wherein the notifying information data comprises proposal information including a confidential item and approval information including an approval status item in response to the proposal information;
(ii) means for retrieving a public network use notifying data, wherein the public network use notifying data is retrieved from the notifying information data and comprises at least the approval status item but the confidential item;
(iii) means for generating an e-mail based on the notifying data retrieved; and
(iv) means for sending the e-mail to the terminal device within the public network.

13. The device according to claim 9, wherein (a-ii) the retrieving means retrieves the items, which constitute the public network use notifying data, in the order of descending priorities according to a pre-set priority order information.

14. The device according to claim 9, wherein the confidential item comprises price information; and
wherein the approval status item comprises an approval status in response to the price.

15. The device according to claim 14, wherein the approval status item comprises a price difference between the price and an approvable price.

16. The device according to claim 9, wherein (a-ii) the retrieved means further executing the retrieving processing at specified time periods.

17. The device according to claim 9, wherein (a-iii) the generating means further, in the case in which the notifying data exceeds a specified data volume, generating the e-mail with excluding an item of more than the specified data volume, and including a message about the excess volume in the e-mail.

18. A method for notifying an approval status by using a computer, the method comprising the steps of:
(i) inputting proposal information including a confidential item and approval information including an approval status item in response to the proposal information;
(ii) storing a notifying information data, which comprises the proposal information and the approval information;
(iii) outputting the notifying information data to a terminal device upon receiving a browsing request for the notifying information data from the terminal device within a closed network;
(iv) retrieving a public network use notifying data, wherein the public network use notifying data is retrieved from the notifying information data stored and comprises at least the approval status item but the confidential item;
(v) generating an e-mail based on the notifying data retrieved; and
(vi) sending the e-mail to the terminal device within the public network.

19. A workflow system, comprising:
a control server device, terminal devices being interconnected to the control server device within a closed network, and a drafter's mobile use terminal device being interconnected to the control server device within a public network;
(a) the control server device comprises:
(i) means for entering proposal information, which is sent by a drafter's terminal device and comprises confidential information, into a recording means;
(ii) the recording means for recording the proposal information;
(iii) means for entering approval information, which sent by an approver's terminal device, into the recording means by correlating with the proposal information;
(iv) means for generating a public network use notifying e-mail, wherein the notifying e-mail is retrieved from the recording means and comprises the proposal information provided with the approval information but the confidential information; and
(v) means for sending the e-mail to the drafter's mobile use terminal device;
(b) the drafter's terminal device comprises:
(i) means for extracting the confidential information from the proposal information; and
(ii) means for outputting the confidential information to the drafter's mobile use terminal device;
(c) the drafter's mobile use terminal device comprises:
(i) means for entering the confidential information from the drafter's terminal device into a confidential information recording means;
(ii) the means for recording the confidential information;
(iii) means for receiving the public network use notifying e-mail from the control server device;
(iv) means for combining the confidential information recorded on the recording means with the notifying e-mail; and
(v) means for displaying the notifying e-mail combined with the confidential information.

20. A control server device for a workflow system being interconnected to terminal devices within a closed network, and being interconnected to a drafter's mobile use terminal device;
(a) the control server device comprises:
(i) means for entering proposal information, which is sent by a drafter's mobile use terminal device and comprises confidential information, into a recording means;
(ii) the recording means for recording the proposal information;
(iii) means for entering approval information, which sent by an approver's terminal device, into the recording means by correlating with the proposal information;
(iv) means for generating a public network use notifying e-mail, wherein the notifying e-mail is retrieved from the recording means and comprises the proposal information but the confidential information; and
(v) means for sending the e-mail to the drafter's mobile use terminal device.

21. A drafter's terminal device being interconnected to a control server device within a closed network, and being interconnected to a drafter's mobile use terminal device;
(b) the drafter's terminal device comprises:
(i) means for sending proposal information inputted by a drafter to the control server device;
(ii) means for extracting confidential information from the proposal information; and
(iii) means for outputting the confidential information to the drafter's mobile use terminal device.

22. A drafter's mobile use terminal device being interconnected to a control server within a public network, and being interconnected to a drafter's terminal device;
(c) the drafter's mobile use terminal device comprises:
(i) means for entering confidential information from the drafter's terminal device into a confidential information recording means;
(ii) the means for recording the confidential information;
(iii) means for receiving a public network use notifying e-mail from the control server device;
(iv) means for combining the confidential information recorded in the recording means with the notifying e-mail; and
(v) means for displaying the notifying e-mail combined with the confidential information.

23. The device according to claim 19:
wherein the proposal information is provided by a proposal ID;
wherein (c-i) the confidential information entering means enters the confidential information by correlating with the proposal ID;
wherein the public network use notifying e-mail includes the proposal ID; and
wherein (c-iv) the combining means retrieves the confidential information based on the proposal ID.

24. The devices according to claim 19, wherein the proposal information comprises a proposed price as the confidential information.

25. The device according to claim 24:
wherein (a-iv) the generating means generates the e-mail by incorporating a difference price between a approval price and the proposed price in the e-mail; and
wherein (c-iv) the combining means determines the approval price, which is calculated from the proposed price recorded on the confidential information recording means and the difference price incorporated in the e-mail, and combines the approval price determined with the e-mail.

26. The device according to claim 25, wherein the approval information sent by the approver's terminal device comprises the difference price.

27. The device according to claim 25, wherein the approval information sent by the approver's terminal device comprises the approval price; and
wherein (a-iv) the generating means determines the price difference, which is calculated from the proposed price recorded on the confidential information recording means and the approval price received.

28. A computer program for a device, and is capable of causing the device perform the means according to claims 19, 20, 21, or 22.

29. A workflow system, comprising:
a control server device, terminal devices being interconnected to the control server device within a closed network, and a drafter's mobile use terminal device being interconnected to the control server device within a public network;
(a) the control server device comprises:
(i) means for entering an encryption key and proposal information, which is sent by a drafter's terminal device and comprises confidential information, into a recording means;
(ii) the recording means for recording the proposal information by correlating with the encryption key;
(iii) means for entering approval information, which sent by an approver's terminal device, into the recording means by correlating with the proposal information;
(iv) means for generating a public network use notifying e-mail, wherein the generating means for retrieving the proposal information provided with the approval information from the recording means, for generating the e-mail based on the proposal information retrieved, and for encrypting the e-mail generated with the encryption key recorded in the recording means; and
(v) means for sending the e-mail to the drafter's mobile use terminal device;
(b) a drafter's terminal device comprises:
(i) means for generating the encryption key; and
(ii) means for outputting the key together with the confidential information to the drafter's mobile use terminal device and the control server device;
(c) the drafter's mobile use terminal device comprises:
(i) means for entering the encryption key from the drafter's terminal device into a key information recording means;
(ii) the means for recording the key information;
(iii) means for receiving the e-mail encrypted from the control server device;
(iv) means for decrypting the e-mail encrypted through the use of the key recorded on the recording means; and
(vi) means for displaying the e-mail decrypted.

30. A control server device for a workflow system being interconnected to terminal devices within a closed network, and being interconnected to a drafter's mobile use terminal device;
(a) the control server device comprises:
(i) means for entering an encryption key and proposal information, which is sent by the drafter's terminal device and comprises confidential information, into a recording means;
(ii) the recording means for recording the proposal information by correlating with the encryption key;
(iii) means for entering approval information, which sent by an approver's terminal device, into the recording means by correlating with the proposal information;
(iv) means for generating a public network use notifying e-mail, wherein the generating means for retrieving the proposal information provided with the approval information from the recording means, for generating the e-mail based on the proposal information retrieved, and for encrypting the e-mail generated with the encryption key recorded in the recording means; and
(v) means for sending the e-mail to the drafter's mobile use terminal device.

31. A drafter's terminal device being interconnected to a control server device within a closed network, and being interconnected to a drafter's mobile use terminal device;
(b) the drafter's terminal device comprises:
(i) means for generating an encryption key; and
(ii) means for outputting the key together with confidential information to the drafter's mobile use terminal device and the control server device.

32. A drafter's mobile use terminal device being interconnected to a control server within a public network, and being interconnected to a drafter's terminal device;
(c) the drafter's mobile use terminal device comprises:
(i) means for entering an encryption key from the drafter's terminal device into a key information recording means;
(ii) the means for recording the key information;
(iii) means for receiving a public network use notifying e-mail encrypted from the control server device;
(iv) means for decrypting the e-mail encrypted through the use of the key recorded on the recording means; and
(v) means for displaying the e-mail decrypted.

33. A computer program for a device, and is capable of causing the device perform the means according to claims 29, 30, 31, or 32.

34. A workflow system, comprising:
an approval status notifying device, terminal device being interconnected to the approval status notifying device within a closed network, and a drafter's mobile use terminal device being interconnected to the approval status notifying device within a public network;
(a) the approval status notifying device comprises:
(i) means for entering proposal information, which is sent by a drafter's terminal device and comprises confidential information, into a recording means;
(ii) the recording means for recording the proposal information:
(iii) means for accessing a notifying information data, which is accessible to the terminal device within the closed network, wherein the notifying information data comprises the proposal information including the confidential information and an approval information including an approval status information in response to the proposal information;
(iv) means for retrieving a public network use notifying data, wherein the public network use notifying data are retrieved from the notifying information data and comprises at least the approval status information but the confidential information;
(v) means for generating an e-mail based on the notifying data retrieved; and
(vi) means for sending the e-mail to the drafter's mobile use terminal device within the public network;
(b) the drafter's terminal device comprises:
(i) means for sending the proposal information to the approval status notifying device;
(c) the drafter's mobile use terminal device comprises:
(i) means for receiving the e-mail, and
(ii) means for displaying the public network use notifying data based on the e-mail received.

35. The system according to claim 34, wherein (a-iv) the retrieving means executes a conversion of the confidential information to a specified mark.

36. The system according to claim 35, wherein (a-iv) the retrieving means executes the conversion on the basis of a currency sign as a flag indicating the confidential information.
